# EUROPEAN PATENT APPLICATION

(11) **EP 4 797 830 A1**
(43) Date of publication of application: **26.08.2026**
(21) Application number: 24890228.0
(22) Date of filing: 13.08.2024
(51) Int. Cl.: H04W 72/04

(54) **RESOURCE CONFIGURATION METHOD AND APPARATUS**

(30) Priority: 14.11.2023 CN 202311524529
(71) Applicant: Honor Device Co., Ltd., Shenzhen, Guangdong 518040 (CN)
(72) Inventor: CHI, Liangang, Shenzhen, Guangdong 518040 (CN)
(74) Representative: Isarpatent
(86) International application number: PCT/CN2024/111902
(87) International publication number: WO 2025/102865

(57) **Abstract**

Embodiments of this application provide a resource configuration method and apparatus, and is applied to the field of communication technologies. The method includes: sending, by a network device, first configuration information to a terminal device. The first configuration information is used to indicate a resource position of an SBFD region. The network device sends first scheduling information to the terminal device. The first scheduling information is used to indicate a resource position of a first channel. The network device and the terminal device transmit the first channel according to the first configuration information and the first scheduling information. In this way, a resource allocation manner adapted to an SBFD technology can be implemented, and then the terminal device and the network device transmit a PUSCH on a corresponding uplink resource or transmit a PDSCH on a corresponding downlink resource according to the first configuration information and the first scheduling information, thereby ensuring effectiveness of resource configuration.

## Description

This application claims priority to Chinese Patent Application No. 202311524529.9, entitled "RESOURCE CONFIGURATION METHOD AND APPARATUS" filed with the China National Intellectual Property Administration on November 14, 2023, which is incorporated herein by reference in its entirety.

### TECHNICAL FIELD

This application relates to the field of communication technologies, and in particular, to a resource configuration method and apparatus.

### BACKGROUND

Since frequency division duplex FDD and time division duplex TDD both have respective defects, a subband non-overlapping full duplex (Subband non-overlapping Full Duplex, SBFD) technology is currently studied as an enhancement to an FDD technology and a TDD technology.

Currently, allocation of frequency domain resources in 5G NR is typically performed based on a single frequency domain configuration of a BWP. However, the introduction of the SBFD technology may lead to varying available frequency domain resources for a DL link and a UL link of a terminal device in different time periods. Consequently, the BWP cannot have different bandwidths in different time periods based solely on the single frequency domain configuration of the BWP. That is, the current frequency domain resource allocation manner is no longer used.

Therefore, it is urgent to provide a frequency domain resource allocation manner adapted to the SBFD technology.

### SUMMARY

Embodiments of this application provide a resource configuration method and apparatus, and is applied to the field of communication technologies.

According to a first aspect, an embodiment of this application provides a resource configuration method. The method includes:
receiving first configuration information sent by a network device, the first configuration information being used to indicate a resource position of a subband non-overlapping full duplex SBFD region;
receiving first scheduling information sent by the network device, the first scheduling information being used to indicate a resource position of a first channel; and
transmitting the first channel according to the first configuration information and the first scheduling information.

In this implementation, the resource position of the SBFD region is indicated by using the first configuration information, and then resource distribution of a PUSCH or a PDSCH in the SBFD region is indicated by using the first scheduling information, so that a resource allocation manner adapted to an SBFD technology can be implemented.

In a possible design, the first configuration information includes time domain position information and frequency domain position information of a first transmission direction.

In a possible design, the SBFD region includes an SBFD slot, and the time domain position information is used to indicate that at least one first slot is the SBFD slot, the first slot being at least part of slots of a first type indicated by a system information block SIB or a first radio resource control RRC configuration message; or
the SBFD region includes an SBFD symbol, and the time domain position information is used to indicate that at least one first symbol is the SBFD symbol, the first symbol being at least part of symbols of the first type indicated by the SIB or the first RRC configuration message.

In a possible design, the first type is a downlink type or a flexible type.

In a possible design, the time domain position information includes a first bitmap, and a bit in the first bitmap whose value is a first value is used to indicate the first slot, or the bit in the first bitmap whose value is the first value is used to indicate the first symbol.

In this implementation, time domain position indication for the SBFD region can be implemented by using a bitmap, which may support configuration of discontinuous slot positions, to implement flexible configuration of slots in the SBFD region.

In a possible design, the time domain position information includes a slot start position and a slot quantity of the at least one first slot; or
the time domain position information includes a symbol start position and a symbol quantity of the at least one first symbol.

In this implementation, slot position indication for the SBFD region can be implemented by using start + quantity.

In a possible design, the time domain position information includes a first resource indication value RIV, the first RIV being used to indicate a slot start position and a slot quantity of the at least one first slot; or
the first RIV being used to indicate a symbol start position and a symbol quantity of the at least one first symbol.

In this implementation, time domain position indication for the SBFD region can be implemented by using an RIV, to reduce signaling overhead.

In a possible design, the time domain position information includes a first index value, and a slot in a time domain position corresponding to the first index value is the first slot; and a symbol in the time domain position corresponding to the first index value is the first symbol.

In this implementation, time domain position indication for the SBFD region can be implemented by indexing, to reduce signaling overhead.

In a possible design, the first transmission direction is uplink or downlink; and the frequency domain position information includes a first bandwidth part BWP configuration parameter, the first BWP configuration parameter being used to indicate an uplink BWP frequency domain position or a downlink BWP frequency domain position of the SBFD region.

In a possible design, the first transmission direction is uplink or downlink; and the frequency domain position information is used to indicate at least one first resource block RB included in an uplink BWP frequency domain position or a downlink BWP frequency domain position of the SBFD region.

In a possible design, the first RB is a virtual resource block VRB; and
the frequency domain position information includes a first VRB start position and a first VRB quantity of the at least one first VRB.

In this implementation, frequency domain position indication for the SBFD region can be implemented by using start + quantity.

In a possible design, the first RB is a VRB; and
the frequency domain position information includes a second RIV, the second RIV being used to indicate a first VRB start position and a first VRB quantity of the at least one first VRB.

In this implementation, frequency domain position indication for the SBFD region can be implemented by using an RIV, to reduce signaling overhead.

In a possible design, the first RB is a physical resource block PRB; and
the frequency domain position information includes a first PRB start position and a first PRB quantity of the at least one first PRB; or
the frequency domain position information includes a third RIV, the third RIV being used to indicate the first PRB position and the first PRB quantity of the at least one first PRB.

In this implementation, by using start plus quantity or an RIV, the frequency domain position indication for the SBFD region can also be implemented by taking PRBs as indication objects.

In a possible design, the frequency domain position information further includes a second PRB start position and a second PRB quantity of the first PRB; or
the frequency domain position information includes a fourth RIV, the fourth RIV being used to indicate the second PRB position and the second PRB quantity of the at least one first PRB.

In this implementation, a plurality of segments of PRBs can also be indicated by taking PRBs as indication objects, to implement PRB-based multi-segment frequency domain position indication for the SBFD region.

In a possible design, the frequency domain position information includes a second index value, and an RB in a frequency domain position corresponding to the second index value is the first RB.

In a possible design, the first configuration information further includes first indication information, the first indication information being used to indicate a size of a resource block group RBG corresponding to an uplink BWP or a downlink BWP of the SBFD region.

In this implementation, frequency domain position indication for the SBFD region can be implemented by indexing, to reduce signaling overhead.

In a possible design, the first configuration information further includes second indication information, the second indication information being used to indicate a frequency domain position of a guard band in the SBFD region.

In a possible design, the first configuration information is at least one of the following: an SIB, RRC signaling, and downlink control information DCI.

In a possible design, the first scheduling information is used to indicate at least one second RB, the second RB being an RB occupied by the first channel in the SBFD region.

In a possible design, if a resource allocation type is a first type, the first scheduling information includes a second bitmap, a bit in the second bitmap whose value is a first value is used to indicate a first RBG, and an RB in the first RBG is the second RB.

In this implementation, frequency domain resources of the first channel in the SBFD region can be indicated by using a bitmap, to effectively enable frequency domain configuration adapted to the SBFD technology.

In a possible design, the second RB is a VRB; and if the resource allocation type is a second type, the first scheduling information is used to indicate the at least one second virtual resource block VRB.

In a possible design, if the first channel is continuous in frequency domain of the SBFD region, the first scheduling information includes a fifth RIV, the fifth RIV being used to indicate a second VRB start position and a second VRB quantity of the at least one second VRB.

In this implementation, for a situation in which the first channel is continuous in the frequency domain of the SBFD region, frequency domain resources of the first channel in the SBFD region are indicated by using an RIV, which effectively enables frequency domain configuration adapted to the SBFD technology and can save signaling overhead.

In a possible design, if the first channel is discontinuous in the frequency domain of the SBFD region,
the first scheduling information includes a sixth RIV, the sixth RIV being used to indicate a third VRB start position and a third VRB quantity, and the second VRB is a VRB remaining after VRBs corresponding to an invalid region are removed from a plurality of continuous VRBs, the plurality of continuous VRBs being VRBs indicated by the third VRB start position and the third VRB quantity, the invalid region being a frequency region corresponding to a second transmission direction and a guard band region, and the second transmission direction being opposite to a transmission direction corresponding to the first channel; or
the first scheduling information includes at least two seventh RIVs, any of the seventh RIVs being used to indicate a segment of continuous second VRBs, and when VRB-to-PRB interleaved mapping is performed, interleaved mapping is performed on the second VRBs indicated by the seventh RIV in a first frequency range, the first frequency range being a frequency range individually indicated by the seventh RIV; or
the first scheduling information includes at least two eighth RIVs, any of the eighth RIVs being used to indicate a segment of continuous second VRBs, and when VRB-to-PRB interleaved mapping is performed, interleaved mapping is performed on the second VRBs indicated by each of the eighth RIV in a second frequency range, the second frequency range being a frequency range jointly indicated by the at least two eighth RIVs;
where the invalid region is not counted into a range of the interleaved mapping.

In this implementation, for a situation in which the first channel is discontinuous in the frequency domain of the SBFD region, frequency domain resources of the first channel in the SBFD region are indicated by using an RIV, which ensures effective frequency domain configuration for all possible SBFD regions and can save signaling overhead.

In a possible design, the first scheduling information includes a first frequency domain resource allocation FDRA, the first FDRA being used to indicate at least one third RB occupied by the first channel in a first region, and the first region being a non-SBFD region or an SBFD region.

In a possible design, the first scheduling information further includes a second FDRA, the second FDRA being used to indicate at least one fourth RB occupied by the first channel in a second region, and the second region being an SBFD region or a non-SBFD region.

In this implementation, by configuring two FDRAs, frequency domain configuration of the first channel can be separately performed for the SBFD region and the non-SBFD region.

In a possible design, the first FDRA is further used to map at least one fourth RB occupied by the first channel in a second region, the second region being an SBFD region or a non-SBFD region.

In this implementation, one FDRA is configured, and the FDRA may indicate frequency domain configuration of the first channel in the first region and may also map frequency domain configuration of a second channel in the second region, thereby implementing separate frequency domain configuration for the SBFD region and the non-SBFD region.

In a possible design, if a resource allocation type is a first type, the first FDRA includes a third bitmap, a bit in the third bitmap whose value is a first value is used to indicate an RBG corresponding to the first region and an RBG corresponding to the second region;
where a size of the RBG corresponding to the first region is an RBG size configured for the first region, and a size of the RBG corresponding to the second region is an RBG size allocated to the second region.

In a possible design, the third RB and the fourth RB are VRBs;
if a resource allocation type is a second type, the first FDRA includes a ninth RIV, the ninth RIV being used to indicate a fourth VRB start position and a fourth VRB quantity of the at least one third VRB; and
a product of the fourth VRB start position and a first coefficient is used to indicate a start VRB of the at least one fourth VRB, and a product of the fourth VRB quantity and a second coefficient is used to indicate a VRB quantity of the at least one fourth VRB.

In a possible design, the first channel is a physical downlink shared channel PDSCH; or the second channel is a physical uplink shared channel PUSCH; or
the first channel is a PUSCH, and the second channel is a PDSCH.

In a possible design, a scheduling manner of the first channel is singletransmission time interval TTI scheduling; or the scheduling manner of the first channel is multi-TTI scheduling.

In a possible design, the method further includes:
receiving a frequency hopping parameter sent by the network device, the frequency hopping parameter including a first frequency adjusting value for hopping from an SBFD region to a non-SBFD region, and/or a second frequency adjusting value for hopping from the non-SBFD region to the SBFD region.

In a possible design, for intra-slot frequency hopping from a first region to a second region, a start RB of a first hop is an RB start position indicated by the first scheduling information, and a start RB of a second hop is an RB indicated by a result of a modulo operation of a second value on a size of a first BWP.

In a possible design, for inter-slot frequency hopping from a first region to a second region, a start RB of even-numbered slots is an RB start position indicated by the first scheduling information, and a start RB of odd-numbered slots is an RB indicated by a result of a modulo operation of a second value on a size of a first BWP.

In a possible design, for inter-slot-group frequency hopping from a first region to a second region, a start RB of slots in even-numbered groups is an RB start position indicated by the first scheduling information, and a start RB of slots in odd-numbered groups is an RB indicated by a result of a modulo operation of a second value on a size of a first BWP.

In a possible design, the second value is a sum of the RB start position indicated by the first scheduling information, an offset RB, and a frequency adjusting value for hopping from the first region to the second region, and the size of the first BWP is a size of an uplink BWP in the second region.

In this implementation, for PUSCH frequency hopping, by incorporating an effect of the first frequency adjusting value, it can be ensured that an available uplink bandwidth for the PUSCH can be expanded in the case of hopping from the SBFD region to the non-SBFD region. In addition, by incorporating an effect of the second frequency adjusting value, it can be ensured that a position after frequency hopping is within a range of the uplink bandwidth in the case of hopping from the non-SBFD region to the SBFD region, thereby preventing an uplink transmission anomaly.

According to a second aspect, an embodiment of this application provides a resource configuration method. The method includes:
sending first configuration information to a terminal device, the first configuration information being used to indicate a resource position of an SBFD region;
sending first scheduling information to the terminal device, the first scheduling information being used to indicate a resource position of a first channel; and
transmitting the first channel according to the first configuration information and the first scheduling information.

In a possible design, the first configuration information includes time domain position information and frequency domain position information of a first transmission direction.

In a possible design, the SBFD region includes an SBFD slot, and the time domain position information is used to indicate that at least one first slot is the SBFD slot, the first slot being at least part of slots of a first type indicated by a system information block SIB or a first radio resource control RRC configuration message; or
the SBFD region includes an SBFD symbol, and the time domain position information is used to indicate that at least one first symbol is the SBFD symbol, the first symbol being at least part of symbols of the first type indicated by the SIB or the first RRC configuration message.

In a possible design, the first type is a downlink type or a flexible type.

In a possible design, the time domain position information includes a first bitmap, and a bit in the first bitmap whose value is a first value is used to indicate the first slot, or the bit in the first bitmap whose value is the first value is used to indicate the first symbol.

In a possible design, the time domain position information includes a slot start position and a slot quantity of the at least one first slot; or
the time domain position information includes a symbol start position and a symbol quantity of the at least one first symbol.

In a possible design, the time domain position information includes a first resource indication value RIV, the first RIV being used to indicate a slot start position and a slot quantity of the at least one first slot; or
the first RIV being used to indicate a symbol start position and a symbol quantity of the at least one first symbol.

In a possible design, the time domain position information includes a first index value, and a slot in a time domain position corresponding to the first index value is the first slot; and a symbol in the time domain position corresponding to the first index value is the first symbol.

In a possible design, the first transmission direction is uplink or downlink; and the frequency domain position information includes a first bandwidth part BWP configuration parameter, the first BWP configuration parameter being used to indicate an uplink BWP frequency domain position or a downlink BWP frequency domain position of the SBFD region.

In a possible design, the first transmission direction is uplink or downlink; and the frequency domain position information is used to indicate at least one first resource block RB included in an uplink BWP frequency domain position or a downlink BWP frequency domain position of the SBFD region.

In a possible design, the first RB is a virtual resource block VRB; and
the frequency domain position information includes a first VRB start position and a first VRB quantity of the at least one first VRB.

In a possible design, the first RB is a VRB; and
the frequency domain position information includes a second RIV, the second RIV being used to indicate a first VRB start position and a first VRB quantity of the at least one first VRB.

In a possible design, the first RB is a physical resource block PRB; and
the frequency domain position information includes a first PRB start position and a first PRB quantity of the at least one first PRB; or
the frequency domain position information includes a third RIV, the third RIV being used to indicate the first PRB position and the first PRB quantity of the at least one first PRB.

In a possible design, the frequency domain position information further includes a second PRB start position and a second PRB quantity of the first PRB; or
the frequency domain position information includes a fourth RIV, the fourth RIV being used to indicate the second PRB position and the second PRB quantity of the at least one first PRB.

In a possible design, the frequency domain position information includes a second index value, and an RB in a frequency domain position corresponding to the second index value is the first RB.

In a possible design, the first configuration information further includes first indication information, the first indication information being used to indicate a size of a resource block group RBG corresponding to an uplink BWP or a downlink BWP of the SBFD region.

In a possible design, the first configuration information further includes second indication information, the second indication information being used to indicate a frequency domain position of a guard band in the SBFD region.

In a possible design, the first configuration information is at least one of the following: an SIB, RRC signaling, and downlink control information DCI.

In a possible design, the first scheduling information is used to indicate at least one second RB, the second RB being an RB occupied by the first channel in the SBFD region.

In a possible design, if a resource allocation type is a first type, the first scheduling information includes a second bitmap, a bit in the second bitmap whose value is a first value is used to indicate a first RBG, and an RB in the first RBG is the second RB.

In a possible design, the second RB is a VRB; and if the resource allocation type is a second type, the first scheduling information is used to indicate the at least one second virtual resource block VRB.

In a possible design, if the first channel is continuous in frequency domain of the SBFD region, the first scheduling information includes a fifth RIV, the fifth RIV being used to indicate a second VRB start position and a second VRB quantity of the at least one second VRB.

In a possible design, if the first channel is discontinuous in the frequency domain of the SBFD region,
the first scheduling information includes a sixth RIV, the sixth RIV being used to indicate a third VRB start position and a third VRB quantity, and the second VRB is a VRB remaining after VRBs corresponding to an invalid region are removed from a plurality of continuous VRBs, the plurality of continuous VRBs being VRBs indicated by the third VRB start position and the third VRB quantity, the invalid region being a frequency region corresponding to a second transmission direction and a guard band region, and the second transmission direction being opposite to a transmission direction corresponding to the first channel; or
the first scheduling information includes at least two seventh RIVs, any of the seventh RIVs being used to indicate a segment of continuous second VRBs, and when VRB-to-PRB interleaved mapping is performed, interleaved mapping is performed on the second VRBs indicated by the seventh RIV in a first frequency range, the first frequency range being a frequency range individually indicated by the seventh RIV; or
the first scheduling information includes at least two eighth RIVs, any of the eighth RIVs being used to indicate a segment of continuous second VRBs, and when VRB-to-PRB interleaved mapping is performed, interleaved mapping is performed on the second VRBs indicated by each of the eighth RIV in a second frequency range, the second frequency range being a frequency range jointly indicated by the at least two eighth RIVs;
where the invalid region is not counted into a range of the interleaved mapping.

In a possible design, the first scheduling information includes a first frequency domain resource allocation FDRA, the first FDRA being used to indicate at least one third RB occupied by the first channel in a first region, and the first region being a non-SBFD region or an SBFD region.

In a possible design, the first scheduling information further includes a second FDRA, the second FDRA being used to indicate at least one fourth RB occupied by the first channel in a second region, and the second region being an SBFD region or a non-SBFD region.

In a possible design, the first FDRA is further used to map at least one fourth RB occupied by the first channel in a second region, the second region being an SBFD region or a non-SBFD region.

In a possible design, if a resource allocation type is a first type, the first FDRA includes a third bitmap, a bit in the third bitmap whose value is a first value is used to indicate an RBG corresponding to the first region and an RBG corresponding to the second region;
where a size of the RBG corresponding to the first region is an RBG size configured for the first region, and a size of the RBG corresponding to the second region is an RBG size allocated to the second region.

In a possible design, the third RB and the fourth RB are VRBs;
if a resource allocation type is a second type, the first FDRA includes a ninth RIV, the ninth RIV being used to indicate a fourth VRB start position and a fourth VRB quantity of the at least one third VRB; and
a product of the fourth VRB start position and a first coefficient is used to indicate a start VRB of the at least one fourth VRB, and a product of the fourth VRB quantity and a second coefficient is used to indicate a VRB quantity of the at least one fourth VRB.

In a possible design, the first channel is a physical downlink shared channel PDSCH; or the second channel is a physical uplink shared channel PUSCH; or
the first channel is a PUSCH, and the second channel is a PDSCH.

In a possible design, a scheduling manner of the first channel is singletransmission time interval TTI scheduling; or the scheduling manner of the first channel is multi-TTI scheduling.

In a possible design, the method further includes:
sending a frequency hopping parameter to the terminal device, the frequency hopping parameter including a first frequency adjusting value for hopping from an SBFD region to a non-SBFD region, and/or a second frequency adjusting value for hopping from the non-SBFD region to the SBFD region.

In a possible design, for intra-slot frequency hopping from a first region to a second region, a start RB of a first hop is an RB start position indicated by the first scheduling information, and a start RB of a second hop is an RB indicated by a result of modulo operation of a second value on a size of a first BWP.

In a possible design, for inter-slot frequency hopping from a first region to a second region, a start RB of even-numbered slots is an RB start position indicated by the first scheduling information, and a start RB of odd-numbered slots is an RB indicated by a result of modulo operation of a second value on a size of a first BWP.

In a possible design, for inter-slot-group frequency hopping from a first region to a second region, a start RB of slots in even-numbered groups is an RB start position indicated by the first scheduling information, and a start RB of slots in odd-numbered groups is an RB indicated by a result of modulo operation of a second value on a size of a first BWP.

In a possible design, the second value is a sum of the RB start position indicated by the first scheduling information, an offset RB, and a frequency adjusting value for hopping from the first region to the second region, and the size of the first BWP is a size of an uplink BWP in the second region.

According to a third aspect, an embodiment of this application provides a resource configuration apparatus. The apparatus includes:
a receiving module configured to receive first configuration information sent by a network device, the first configuration information being used to indicate a resource position of a subband non-overlapping full duplex SBFD region;
the receiving module being further configured to receive first scheduling information sent by the network device, the first scheduling information being used to indicate a resource position of a first channel; and
a transmission module, configured to transmit the first channel according to the first configuration information and the first scheduling information.

According to a fourth aspect, an embodiment of this application provides a resource configuration apparatus. The apparatus includes:
a sending module, configured to send first configuration information to a terminal device, the first configuration information being used to indicate a resource position of an SBFD region;
the sending module being further configured to send first scheduling information to the terminal device, the first scheduling information being used to indicate a resource position of a first channel; and
a transmission module, configured to transmit the first channel according to the first configuration information and the first scheduling information.

According to a fifth aspect, an embodiment of this application provides a terminal device. The terminal device may also be referred to as a terminal (terminal), a user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device includes: a processor and a memory. The memory stores computer-executable instructions. The processor executes the computer-executable instructions stored in the memory, causing the terminal device to perform the method according to the first aspect.

According to a sixth aspect, an embodiment of this application provides a network device. The network device may be a base station (Base Transceiver Station, referred to as BTS for short) in a GSM system or a CDMA system, or may be a base station (NodeB, referred to as NB for short) in a WCDMA system, or may be an evolved base station (evolved NodeB, referred to as eNB for short), an access point (access point, AP), or a relay station in an LTE system, or may be a base station in a 5G system, or the like.

The network device includes: a processor and a memory. The memory stores computer-executable instructions. The processor executes the computer-executable instructions stored in the memory, causing the terminal device to perform the method according to the second aspect.

According to a seventh aspect, an embodiment of this application provides a computer-readable storage medium. The computer-readable storage medium stores a computer program. The computer program, when executed by a processor, implements the method according to the first aspect and the second aspect.

According to an eighth aspect, this application provides a computer program product. The computer program product includes a computer program. The computer program, when run, causes a computer to perform the method according to the first aspect and the second aspect.

According to a ninth aspect, an embodiment of this application provides a chip. The chip includes a processor. The processor is configured to invoke a computer program in a memory to perform the method according to the first aspect and the second aspect.

It may be understood that the technical solutions according to the second aspect to the ninth aspect of this application correspond to those according to the first aspect of this application, and beneficial effects obtained in the aspects and the corresponding feasible implementations are similar. Details are not described again.

### BRIEF DESCRIPTION OF DRAWINGS

FIG. 1 is a schematic diagram of VRB mapping according to an embodiment of this application;
FIG. 2 is a schematic diagram of RBGs according to an embodiment of this application;
FIG. 3 is a schematic diagram I of indication of frequency domain resources according to an embodiment of this application;
FIG. 4A and FIG. 4B are a schematic diagram II of indication of frequency domain resources according to an embodiment of this application;
FIG. 5 is a schematic diagram of a communication scenario according to an embodiment of this application;
FIG. 6A is a schematic diagram I of implementation of SBFD slots according to an embodiment of this application;
FIG. 6B is a schematic diagram II of implementation of SBFD slots according to an embodiment of this application;
FIG. 6C is a schematic diagram III of implementation of SBFD slots according to an embodiment of this application;
FIG. 6D is a schematic diagram IV of implementation of SBFD slots according to an embodiment of this application;
FIG. 7 is a diagram of signaling interaction of a resource configuration method according to an embodiment of this application;
FIG. 8 is a schematic diagram I of indication of time domain resources according to an embodiment of this application;
FIG. 9 is a schematic diagram II of indication of time domain resources according to an embodiment of this application;
FIG. 10 is a schematic diagram III of indication of time domain resources according to an embodiment of this application;
FIG. 11A and FIG. 11B are a schematic diagram I of indication of discontinuous frequency domain resources according to an embodiment of this application;
FIG. 12A and FIG. 12B are a schematic diagram II of indication of discontinuous frequency domain resources according to an embodiment of this application;
FIG. 13A and FIG. 13B are a schematic diagram III of indication of discontinuous frequency domain resources according to an embodiment of this application;
FIG. 14 is a schematic diagram I of PUSCH frequency hopping processing according to an embodiment of this application;
FIG. 15 is a schematic diagram II of PUSCH frequency hopping processing according to an embodiment of this application;
FIG. 16 is a schematic diagram III of PUSCH frequency hopping processing according to an embodiment of this application;
FIG. 17 is a schematic diagram IV of PUSCH frequency hopping processing according to an embodiment of this application;
FIG. 18 is a schematic structural diagram I of a resource configuration apparatus according to an embodiment of this application;
FIG. 19 is a schematic structural diagram II of a resource configuration apparatus according to an embodiment of this application;
FIG. 20 is a schematic structural diagram of a terminal device according to an embodiment of this application; and
FIG. 21 is a schematic structural diagram of a network device according to an embodiment of this application.

### DESCRIPTION OF EMBODIMENTS

To facilitate a clear description of the technical solutions in embodiments of this application, the words such as "example" or "for example" in the embodiments of this application are used to indicate an example, an illustration, or a description. Any embodiment or design solution described as "example" or "for example" in this application should not be construed as being more preferred or having more advantages than other embodiments or design solutions. Exactly, the words such as "example" or "for example" are used to present related concepts in a specific manner.

In the embodiments of this application, "at least one" means one or more, and "a plurality of" means two or more. The term "and/or" describes an association relationship between associated objects and represents that three relationships may exist. For example, A and/or B may represent that: only A exists, both A and B exist, and only B exists, where A and B may be singular or plural. The character "/" generally indicates an "or" relationship between the associated objects. "At least one of the following items" or a similar expression thereof refers to any combination of these items, including one item or any combination of a plurality of items. For example, at least one of a, b, or c may represent a, b, c, a and b, a and c, b and c, or a, b, and c, where a, b, and c may be singular or plural.

It should be noted that in the embodiments of this application, "when ... " may be an instantaneous occurrence time of a case, or may be a period of time after occurrence of a case, which is not specifically limited in embodiments of this application. In addition, a display interface provided in the embodiments of this application is merely used as an example, and the display interface may further include more or less content.

To facilitate understanding, concepts involved in this application are first explained.

### 1. Terminal device

The terminal device may be a device that includes a wireless transceiving function and may cooperate with a network device to provide a communication service for a user. Specifically, the terminal device may be a user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. For example, the terminal device may be a cellular phone, a cordless telephone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, an invehicle device, a wearable device, or a terminal device in a future 5G network or a network after 5G.

### 2. Network device

The network device may be a device configured to communicate with the terminal device, which, for example, may be a base station (Base Transceiver Station, BTS) in a global system for mobile communication (Global System for Mobile Communication, GSM) or code division multiple access (Code Division Multiple Access, CDMA) communication system, or may be a base station (NodeB, NB) in a wideband code division multiple access (Wideband Code Division Multiple Access, WCDMA) system, or may be an evolved base station (Evolutional Node B, eNB or eNodeB) in an LTE system. Alternatively, the network device may be a relay station, an access point, an on-board device, a wearable device, a network side device in a future 5G network or a network after 5G, a network device in a future evolved public land mobile network (Public Land Mobile Network, PLMN) network, or the like.

The network device involved in the embodiments of this application may also be referred to as a radio access network (Radio Access Network, RAN) device. The RAN device is connected to the terminal device, and is configured to receive data of the terminal device and send the data to a core network device. The RAN device corresponds to different devices in different communication systems, for example, corresponds to a base station and a base station controller in a 2G system, corresponds to a base station and a radio network controller (Radio Network Controller, RNC) in a 3G system, corresponds to an evolved base station (Evolutional Node B, eNB) in a 4G system, and corresponds to a 5G system in a 5G system, for example, an access network device (for example, gNB, a centralized unit CU, and a distributed unit DU) in new radio (New Radio, NR).

### 3. Bandwidth part (bandwidth part, BWP)

The BWP may also be referred to as a carrier bandwidth part (carrier bandwidth part). In frequency domain, one BWP includes a positive integer quantity of continuous resource units, for example, includes a positive integer quantity of continuous subcarriers, resource blocks (resource block, RB), or resource block groups (RB group, RBG). The BWP may be a downlink BWP or an uplink BWP. The uplink BWP is used by the terminal device to send a signal to the network device, and the downlink BWP is used by the network device to send a signal to the terminal device. In the embodiments of this application, the positive integer quantity may be 1, 2, 3, or more, which is not limited in the embodiments of this application.

A plurality of BWPs may be configured for the terminal device. For each BWP, a parameter set (numerology) of the BWP may be independently configured through pre-configuration or by sending signaling by the network device to the terminal device. Numerologies of different BWPs may be the same or may be different. The numerology may be defined by using, but not limited to, one or more of the following parameter information: a subcarrier spacing, a cyclic prefix (cyclic prefix, CP), information about a time unit, a BWP bandwidth, and the like. For example, the numerology may be defined by using the subcarrier spacing and the CP.

### 4. Resource Element (RE), or referred to as resource particle

The RE is a minimum resource unit in NR physical resources, and occupies 1 orthogonal frequency division multiplexing (orthogonal frequency division multiplexing, OFDM) Symbol in time domain and 1 subcarrier in frequency domain.

### 5. Resource block (Resource Block, RB)

The RB is one of the most basic resource units. In frequency domain, one RB may include 12 subcarriers. A concept of time domain is not emphasized in RBs in NR. During frequency domain resource allocation, the RB may be further classified as a physical resource block (physical resource block, PRB) or a virtual resource block (virtual resource block, VRB).

Unless otherwise specified, the RB in the embodiments of this application may be a VRB or a PRB. If the RB is described together with other information, whether the RB is a VRB or a PRB may be determined according to a specific scenario.

### 6. Frequency domain interleaved mapping

During frequency domain resource allocation, if configured RBs are VRBs, data is first mapped to the VRBs and then mapped from the VRBs to PRBs. In the mapping step, if there is no frequency domain interleaving, numbers of VRBs are in one-to-one correspondence to numbers of PRBs. For example, data on a VRB numbered n may be mapped to a PRB numbered n.

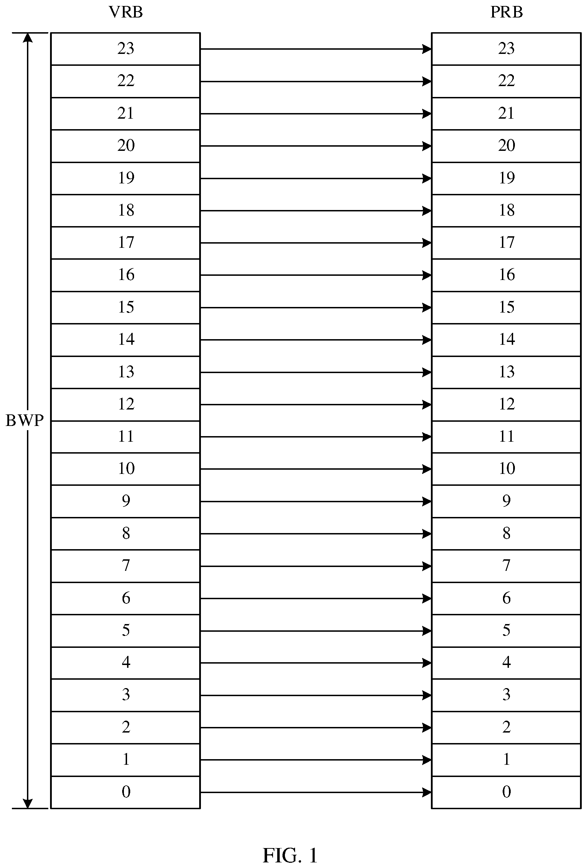

For example, refer to FIG. 1 for understanding. FIG. 1 is a schematic diagram of VRB mapping according to an embodiment of this application.

As shown in FIG. 1, assuming that a current BWP includes 24 VRBs that are numbered 0 to 23 and assuming that frequency domain interleaving is not currently performed, when VRB-to-PRB mapping is performed, data on a VRB numbered 0 may be mapped to a PRB numbered 0, data on a VRB numbered 1 may be mapped to a PRB numbered 1, and so on.

However, in the mapping step, if frequency domain interleaving is performed, numbers of the VRBs and the PRBs may be mapped in a staggered manner in a current BWP bandwidth. For example, data on a VRB numbered n may be mapped to a PRB numbered n+K. Herein, n is an integer greater than or equal to zero, and K is an integer. For a specific interleaving rule, refer to the prior art. Details are not described herein again.

For example, assuming that the current BWP also includes 24 VRBs that are numbered 0 to 23 and assuming that frequency domain interleaving is currently performed, when VRB-to-PRB mapping is performed, data on a VRB numbered 21 may be mapped to a PRB numbered 19, data on a VRB numbered 20 may be mapped to a PRB numbered 18, and so on.

### 6. Resource block group (resource block groups, RBG)

The RBG includes a group of continuous RBs. A quantity of the RBs included in the RBG is an RBG size (RBG size). For example, if the RBG size is 2, one RBG includes 2 continuous RBs. Currently, the RBG size in an NR protocol may be 2, 4, 8, 16, or the like.

For the terminal device, the RBG size may be determined according to an RBG configuration and a BWP bandwidth. Currently, two RBG configurations are predefined in an NR standard. In an RBG configuration 1, candidate values of the RBG size are 2, 4, 8, and 16. In an RBG configuration 2, candidate values of the RBG size are 4, 8, and 16. The network device may indicate an RBG configuration in each BWP to the terminal device by using a high-layer signaling parameter rbg-Size.

### 7. Quantity and Sizes of RBGs in a BWP

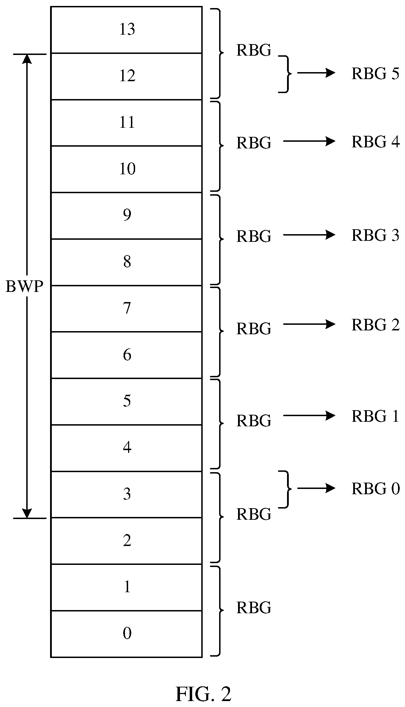

RBGs are obtained through division according to a system bandwidth. To be specific, the first RBG includes P RBs starting from the system bandwidth, and so on. P is an RBG size. Refer to FIG. 2 for understanding. FIG. 2 is a schematic diagram of RBGs according to an embodiment of this application.

Specifically, as shown in FIG. 2, RB0 is an RB having the smallest number in the system bandwidth. Then, when P=2, starting from the RB0, each 2 RBs form an RBG. For example, in the example in FIG. 2, RB0 and RB1 form an RBG, RB2 and RB3 form an RBG, RB4 and RB5 form an RBG, and so on.

In addition, the BWP is a segment of continuous frequency domain resources defined by using a start RB (namely, the first RB) and an RB length. Both the start RB and an end RB in the BWP may be any RB in the system bandwidth. Therefore, one part of RBs in an RBG to which the start RB or the end RB belongs may be located inside the BWP, and the other part may be located outside the BWP. For example, as shown in FIG. 2, the start RB of the BWP is RB3, and RB2 and RB3 originally belong to a same RBG. However, RB3 is inside the BWP, and RB2 is outside the BWP. The end RB of the BWP is RB12, and RB12 and RB13 originally belong to a same RBG. However, RB3 is inside the BWP, and RB13 is outside the BWP.

Therefore, it may be understood that quantities of RBs included in the first and last RBGs in the BWP may be equal to P, or may be less than P. In addition, the RBGs in the BWP each include P RBs.

For example, in the example in FIG. 2, the 1^{st} RBG (that is, RBG 0) in the BWP includes only RB3, the 2^{nd} RBG (that is, RBG 1) includes RB4 and RB5, the 3^{rd} RBG (that is, RBG 2) includes RB6 and RB7, the 4^{th} RBG (that is, RBG 3) includes RB8 and RB9, the 5^{th} RBG (that is, RBG 4) includes RB10 and RB11, and the last RBG (that is, RBG 5) includes only RB12.

### 8. Existing frequency domain resource allocation type

There are two existing frequency domain resource allocation types: a type 0 (type0) and a type 1 (type1).

For the frequency domain resource allocation of the type 0 (type0), a bitmap (bitmap) is used to indicate an RBG to perform frequency domain allocation, and continuous or discontinuous frequency domain resource allocation may be implemented.

For the frequency domain resource allocation of the type 1 (type1), a segment of continuous RBs is indicated by using "start point + length", and this type can only implement classification of continuous resources.

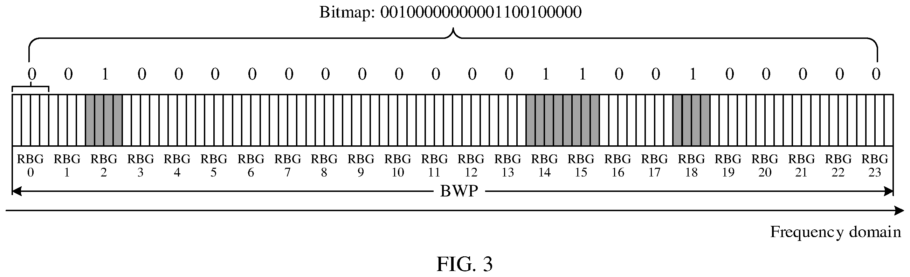

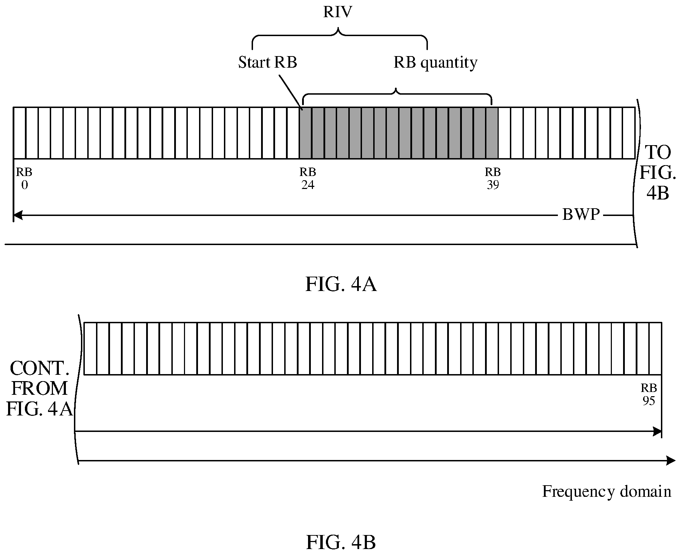

The frequency domain resource allocation of the type0 and the type1 introduced above may be further understood with reference to FIG. 3 and FIG. 4A and FIG. 4B. FIG. 3 is a schematic diagram I of indication of frequency domain resources according to an embodiment of this application, and FIG. 4A and FIG. 4B are a schematic diagram II of indication of frequency domain resources according to an embodiment of this application.

First, type0 is exemplarily described with reference to FIG. 3.

As shown in FIG. 3, assuming that one BWP includes 24 continuous RBGs and an RBG size is 4, each RBG correspondingly includes 4 RBs. In addition, each RBG corresponds to a bit (bit). When the bit corresponding to the RBG is a first value (for example, 1), it indicates that the RBG is allocated to the terminal device. When the bit corresponding to the RBG is a second value (for example, 0), it indicates that the RBG is not allocated to the terminal device. Bits respectively corresponding to a plurality of RBGs form a bitmap (bitmap) in FIG. 3.

In the example in FIG. 3, assuming that 4 RBGs: RBG2, RBG14, RBG15, and RBG18, are allocated to the terminal device, bits corresponding to the 4 RBGs in the bitmap are 1, and bits corresponding to the remaining RBGs are 1. Therefore, the bitmap is 00100000000001100100000 shown in FIG. 3.

It may be understood with reference to the foregoing example that the resource allocation manner of type0 may implement flexible distribution of frequency domain resources in the BWP, and support discontinuous frequency domain resource allocation.

Then, type1 is exemplarily described with reference to FIG. 4A and FIG. 4B.

As shown in FIG. 4A and FIG. 4B, it is assumed that one BWP includes 96 continuous RBs. The network device indicates, by using a start RB (*RBₛₜₐᵣₜ)* and an RB quantity (*L_{length}*), RBs allocated to the terminal device. For example, in the example in FIG. 4A and FIG. 4B, if the start RB is RB24 and the RB quantity is 16, 16 continuous RBs from RB24 to RB30 may be allocated to the terminal device.

Moreover, the network device may directly indicate the start RB and the RB quantity by using parameters *RBₛₜₐᵣₜ* and *L_{length}*. Alternatively, the network device may indicate the start RB and the RB quantity by using a resource indication value (resource indication value, RIV). The RIV may implement joint coding of the start RB and the RB quantity, thereby indicating two pieces of data, namely, the start RB and the RB quantity, by using one RIV. For a specific calculation manner of the RIV, refer to the description in the related art. Details are not described herein again.

In the resource allocation manner of type1, RB-level frequency domain resources may be indicated by using a smaller number of bits, but this manner can only implement continuous frequency domain resource allocation.

### 9. DMRS

The demodulation reference signal (Demodulation Reference Signal, DMRS) may be used for channel estimation. For example, accuracy of uplink channel estimation can be improved by using DMRS bundling, that is, joint channel estimation is performed by combining DMRSs sent by a plurality of slots, thereby improving coverage of an uplink PUSCH/PUCCH.

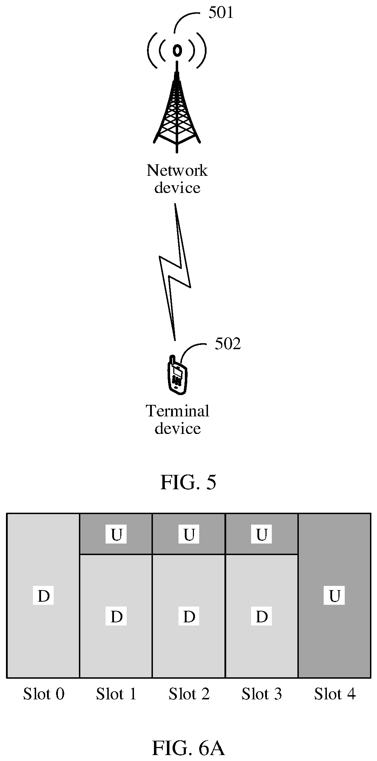

Based on the content descried above, a scenario to which the resource configuration method in this application is applicable is first described below with reference to FIG. 5.

FIG. 5 is a schematic diagram of a communication scenario according to an embodiment of this application. Referring to FIG. 5, a network device 501 and a terminal device 502 are included. The network device 501 and the terminal device 502 may perform wireless communication. The terminal device 502 may communicate with at least one core network by using a radio access network (Radio Access Network, RAN).

The communication system may be a global system for mobile communications (Global System of Mobile communication, referred to as GSM for short), a code division multiple access (Code Division Multiple Access, referred to as CDMA for short) system, a wideband code division multiple access (Wideband Code Division Multiple Access, referred to as WCDMA for short) system, a long term evolution (Long Term XR VR AREvolution, referred to as LTE for short) system, or a fifth generation mobile communication (5th-Generation, referred to as 5G for short) system.

Correspondingly, the network device may be a base station (Base Transceiver Station, referred to as BTS for short) in a GSM system or a CDMA system, or may be a base station (NodeB, referred to as NB for short) in a WCDMA system, or may be an evolved base station (evolved NodeB, referred to as eNB for short), an access point (access point, AP), or a relay station in an LTE system, or may be a base station in a 5G system, or the like, which is not limited herein.

The 5G mobile communication system in this application includes a non-standalone (non-standalone, NSA) 5G mobile communication system and/or a standalone (standalone, SA) 5G mobile communication system. The technical solutions provided in this application may be further applied to a future communication system, for example, a sixth generation mobile communication system. The communication system may further be a PLMN network, a device-to-device (device-to-device, D2D) network, a machine-to-machine (machine to machine, M2M) network, an IoT network, or another network.

It may be understood that if the technical solution in the embodiments of this application is applied to another wireless communication network, a corresponding name may be replaced with a name of a corresponding function in the another wireless communication network.

If data transmission between the terminal device and the network device is implemented based on a duplex technology, data transmission efficiency can be greatly improved. Duplex means that bidirectional data transmission can be performed between the terminal device and the network device.

The duplex technology may include two modes: full-duplex and half-duplex. Full-duplex means that bidirectional data transmission may be performed simultaneously, that is, both communication parties may also receive data while sending data. Half-duplex means that the communication device cannot perform receiving and sending simultaneously, and can only perform receiving and sending alternately.

Further, the half-duplex mode may be divided into frequency-division duplex (Frequency-division Duplex, FDD) and time-division duplex (Time-division Duplex, TDD). In the TDD, uplink and downlink alternate on a same frequency band according to time allocation; whereas in the FDD, uplink and downlink operate on different frequency bands simultaneously.

In a TDD system, time domain resources are divided between downlink and uplink. In the TDD, allocating a limited duration to the uplink or downlink may result in reduced coverage, increased latency, and a lower capacity. The FDD also has the corresponding defects.

To improve uplink (uplink, UL) coverage and throughput and serve as an enhancement to the conventional TDD technology and FDD technology, research is currently conducted on the full-duplex technology, namely, research is conducted on feasibility of simultaneous existence of downlink and uplink. More specifically, specific research is conducted on a subband non-overlapping full duplex (Subband non-overlapping Full Duplex, SBFD) technology. The SBFD technology supports subband (subband)-based full-duplex operations. For example, the network device can configure a UL subband on a (downlink) slot or a flexible (flexible, F) slot, to schedule UE uplink transmission.

More specifically, a carrier component (carrier component, CC) may be divided into a plurality of subbands (subband, SB) in a frequency domain range on a downlink (downlink, DL) symbol (or slot) or a flexible (flexible, F) symbol (or slot). The plurality of subbands obtained by division may include a UL subband and at least one DL subband. For example, the plurality of subbands include 1 or 2 DL subbands. The network device may send a DL signal in the DL subband and receive a UL signal in the UL subband.

When a time period includes both a DL subband and a UL subband in frequency domain, a part corresponding to the DL subband may be understood as a downlink part in an SBFD symbol, and a part corresponding to the UL subband may be understood as an uplink part in the SBFD symbol.

Moreover, when a plurality of symbols included in a slot include at least one SBFD symbol, the slot may be referred to as an SBFD slot. Optionally, when a plurality of symbols included in a slot are all SBFD symbols, the slot may be referred to as an SBFD slot.

Scalably, when a plurality of slots included in a subframe include at least one SBFD slot, the subframe may be referred to as an SBFD subframe. Optionally, when a plurality of slots included in a subframe are all SBFD slots, the subframe may be referred to as an SBFD subframe.

In addition, scalably, when a plurality of subframes included in a frame include at least one SBFD subframe, the frame may be referred to as an SBFD frame. Optionally, when a plurality of subframes included in a frame are all SBFD subframes, the frame may be referred to as an SBFD frame.

Regardless of an SBFD slot, an SBFD subframe, or an SBFD frame, there is still a distinction between uplink and downlink. A distinction manner is similar to that in the implementation described above, and details are not described herein again.

In this embodiment, a region formed by SBFD symbols (or SBFD slots, SBFD subframes, or SBFD frames) may be referred to as an SBFD region. Then, it may be understood that uplink and downlink parts also exist in the SBFD region. For example, when resource granularity is a symbol, a region formed by uplink subbands in an SBFD symbol is the uplink part of the SBFD region, and a region formed by downlink subbands in the SBFD symbol is the downlink part of the SBFD region. Alternatively, the SBFD region may also be referred to as an SBFD operation (operation).

In addition, a region not including the SBFD symbols (or the SBFD slots, the SBFD subframes, or the SBFD frames) may be referred to as a non-SBFD region.

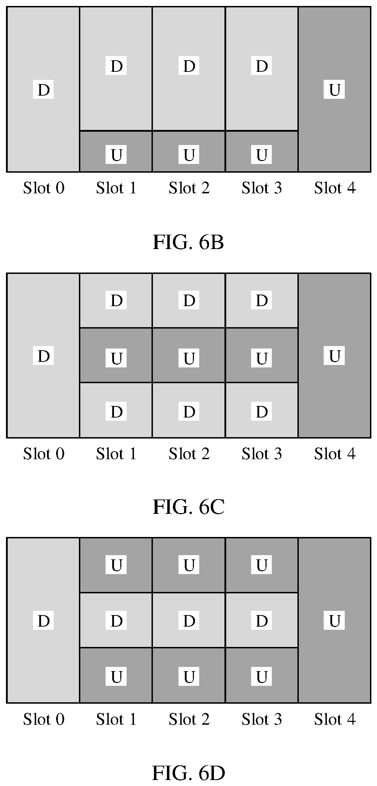

Descriptions are provided below based on an example in which the SBFD region includes SBFD slots (that is, granularity in the SBFD region is slots) and with reference to FIG. 6A to FIG. 6D along with several specific examples. FIG. 6A is a schematic diagram I of implementation of SBFD slots according to an embodiment of this application, FIG. 6B is a schematic diagram II of implementation of SBFD slots according to an embodiment of this application, FIG. 6C is a schematic diagram III of implementation of SBFD slots according to an embodiment of this application, and FIG. 6D is a schematic diagram IV of implementation of SBFD slots according to an embodiment of this application.

As shown in FIG. 6A, it is assumed that there are currently 5 slots: a slot 0 to a slot 4. It is assumed that the slot 0 is a downlink slot (downlink is denoted by D in FIG. 6A), the slot 4 is an uplink slot (uplink is denoted by U in FIG. 6A), and the slot 1 to the slot 3 are originally downlink slots or flexible slots. To implement the SBFD technology described above, for three slots, namely, the slot 1 to the slot 3, an uplink subband and a downlink subband may be divided in a frequency domain range thereof. The uplink subband is used to transmit an uplink signal, and the downlink subband is used to transmit a downlink signal. Therefore, in the three slots, namely, the slot 1 to the slot 3, a part corresponding to the uplink subband (that is, upper half of the slot 1 to the slot 3 in FIG. 6A) is used as the uplink SBFD slot described above, and a part corresponding to the downlink subband (that is, lower half of the slot 1 to the slot 3 in FIG. 6A) is used as the downlink SBFD slot described above.

Divisions shown in FIG. 6A, FIG. 6B, and FIG. 6C are similar. Part of subbands in UL slots or flexible slots are divided as an uplink subband, and the rest are divided as a downlink subband. A difference lies in that, according to a direction of increasing frequency domain, the case illustrated in FIG. 6A is that the uplink subband is located above the downlink subband, the case illustrated in FIG. 6B is that the uplink subband is located below the downlink subband, and the case illustrated in FIG. 6C is that the uplink subband is located between two discontinuous downlink subbands.

In addition, referring to FIG. 6D, a subband may further be divided to serve as a downlink subband in uplink slots. As shown in FIG. 6D, it is also assumed that currently there are 5 slots, namely, a slot 0 to a slot 4. It is assumed that the slot 0 is a downlink slot, the slot 4 is an uplink slot, and the slot 1 to the slot 3 are originally uplink slots. To implement the SBFD technology described above, an uplink subband and a downlink subband may be divided in a frequency domain range for the three slots, namely, the slot 1 to the slot 3. The uplink subband is used for an uplink signal, and the downlink subband is used to transmit a downlink signal. Therefore, the three slots, namely, the slot 1 to the slot 3, are used as the SBFD slots described above, which are also distinguished as uplink SBFD slots and downlink SBFD slots.

In an actual implementation process, a specific division manner and an uplink/downlink allocation manner of a subband may be determined according to an actual requirement. In addition, FIG. 6A to FIG. 6D are described by using slots as an example. If the slots are replaced with symbols, it may be correspondingly understood that an implementation manner of the SBFD symbols is similar. Therefore, details are not described herein again.

In addition, a guard band (guard band, GB) may further be included between the DL subband and the UL subband in the SBFD region. Frequency domain isolation may be implemented by using the GB, thereby reducing interference between a DL signal in the DL subband and a UL signal in the UL subband.

In the SBFD region, the DL subband and the GB are unavailable for UL transmission. In addition, the SBFD slots and the UL slots have different frequency domain ranges available for UL transmission.

Currently, in 5G NR, frequency domain resource allocation for a PDSCH (Physical Downlink Shared Channel) or a PUSCH (Physical Uplink Shared Channel) is generally performed based on a single frequency domain configuration of a BWP. For example, a frequency domain resource range and an RBG size are configured for the BWP, thereby implementing frequency domain resource allocation.

However, after the introduction of the SBFD technology, in different time periods, a DL link and a UL link of the terminal device have different available frequency domain resources. Using FIG. 6A described above as an example, available frequency domain resources for the DL link in the slot 0 and available frequency domain resources for the DL link in the slot 1 are different, specifically manifested as fewer available frequency domain resources for the DL link in the slot 1.

In this way, it needs to be ensured that the BWP configured for the terminal device has different bandwidths in different time periods. In other words, the PDSCH and the PUSCH need to have different available PRBs in different time periods. Therefore, current frequency domain resource allocation manners are no longer suitable, and it is urgent to provide a frequency domain resource allocation manner adapted to the SBFD technology.

In the resource configuration method provided in this embodiment of this application, a manner of indicating a resource position of an SBFD region and a manner of configuring resources for a PUSCH or a PDSCH in the SBFD region are described, thereby implementing a frequency domain resource allocation manner adapted to the SBFD technology.

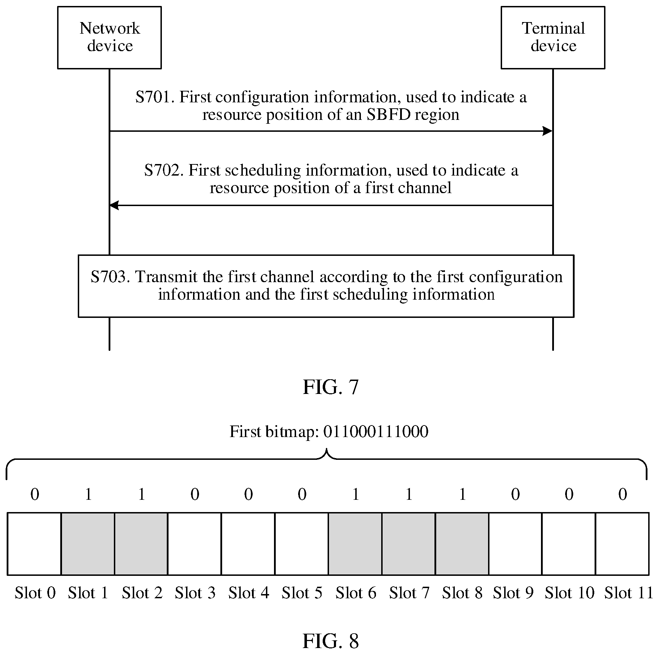

The resource configuration method provided in this application is described below with reference to specific embodiments. FIG. 7 is a diagram of signaling interaction of a resource configuration method according to an embodiment of this application.

As shown in FIG. 7, the method includes the following steps.

S701. A network device sends first configuration information to a terminal device, the first configuration information being used to indicate a resource position of an SBFD region.

The network device sends the first configuration information to the terminal device, to indicate the resource position of the SBFD region. The concept of the SBFD region is described in the foregoing embodiments, and details are not described herein again. The resource position includes a time domain position in a time domain direction and a frequency domain position in a frequency domain direction. Therefore, the first configuration information may include time domain position information and frequency domain position information.

In the time domain direction, the time domain position information is used to indicate a time domain position occupied by the SBFD region (for example, which symbols, slots, subframes, and frames are occupied), that is, determine the SBFD symbols, SBFD slots, SBFD subframes, and SBFD frames described above. These concepts have been described in the foregoing embodiments, and details are not described herein again.

In the frequency domain direction, the frequency domain position information is used to indicate specific frequency domain positions of an uplink BWP and a downlink BWP of the SBFD region.

In a possible implementation, the frequency domain position information may indicate both the frequency domain position of the uplink BWP and the frequency domain position of the downlink BWP.

Alternatively, since in this embodiment, part of frequency domain positions on downlink symbols or flexible symbols (using the symbols as an example, other time domain positions are implemented in a similar manner) are divided as an uplink subband, on the downlink symbols or the flexible symbols, a part other than the uplink subband and the guard band is a part of the downlink subband. Therefore, the frequency domain position information may alternatively only indicate the frequency domain position of the uplink BWP, and the frequency domain position of the downlink BWP may be obtained through derivation. Alternatively, the frequency domain position information may indicate only the frequency domain position of the downlink BWP, and the frequency domain position of the uplink BWP may be obtained through derivation.

Therefore, the frequency domain position information in this embodiment may be frequency domain position information of the BWP in a first transmission direction. The first transmission direction may include uplink and/or downlink. When the first transmission direction is uplink, the frequency domain position information is used to indicate the frequency domain position of the uplink BWP. When the first transmission direction is downlink, the frequency domain position information is used to indicate the frequency domain position of the downlink BWP.

The first configuration information is sent to the terminal device, so that the terminal device can clearly identify which specific resource regions are SBFD regions, and then can complete corresponding uplink and downlink transmission in the SBFD regions.

S702. The network device sends first scheduling information to the terminal device, the first scheduling information being used to indicate a resource position of a first channel.

How to distribute transmission resources of a PDSCH or a PUSCH in the SBFD region further needs to be indicated when the PDSHC or the PUSCH need to be transmitted in the SBFD region.

In this embodiment, the network device may send the first scheduling information to the terminal device. The first scheduling information is used to indicate the resource position of the first channel, and the first channel may be a PDSCH or a PUSCH.

Taking a need to transmit the first channel on a certain SBFD symbol as an example, if the first channel is a PDSCH, the network device may, by using the first scheduling information (which may also be understood as downlink scheduling information), indicate that a resource position of the PDSCH includes the SBFD symbol in time domain, and indicate that the resource position of the PDSCH is located at a specific frequency domain position on a downlink subband in the SBFD symbol in frequency domain.

Also taking a need to transmit the first channel on a certain SBFD symbol as an example, if the first channel is a PUSCH, the network device may, by using the first scheduling information (which may also be understood as uplink scheduling information), indicate that a resource position of the PUSCH includes the SBFD symbol in time domain, and indicate that the resource position of the PUSCH is located at a specific frequency domain position on an uplink subband in the SBFD symbol in frequency domain.

It may be understood that when the first channel is transmitted in the SBFD region, the first scheduling information is used to indicate a resource position of the first channel in the SBFD region. When the first channel is transmitted in a non-SBFD region, the first scheduling information is used to indicate a resource position of the first channel in the non-SBFD region. Therefore, a specific implementation of the first scheduling information is not limited in this embodiment, which depends on a specific resource configuration of the first channel.

S703. The network device and the terminal device transmit the first channel according to the first configuration information and the first scheduling information.

After the network device sends the first configuration information and the first scheduling information described above to the terminal device, the network device and the terminal device may transmit the first channel based on a same resource configuration.

When the first channel is a PDSCH, correspondingly, the network device sends the PDSCH and the terminal device receives the PDSCH. Specifically, the terminal device may determine a resource position of the SBFD region according to the first configuration information, and determine a resource position of the PDSCH according to the first scheduling information, thereby receiving the PDSCH at the corresponding resource position.

In addition, when the first channel is a PUSCH, correspondingly, the terminal device sends the PUSCH and the network device receives the PUSCH. Specifically, the terminal device may determine a resource position of the SBFD region according to the first configuration information, and determine a resource position of the PUSCH according to the first scheduling information, thereby receiving the PUSCH at the corresponding resource position.

The resource configuration method provided in this embodiment of this application includes: sending, by a network device, first configuration information to a terminal device, the first configuration information being used to indicate a resource position of an uplink BWP or a downlink BWP of an SBFD region. The network device sends first scheduling information to the terminal device. The first scheduling information is used to indicate a resource position of a first channel. The network device and the terminal device transmit the first channel according to the first configuration information and the first scheduling information. The first configuration information indicates a resource position of the SBFD region, and the first scheduling information indicates resource distribution of a PUSCH or a PDSCH in the SBFD region, so that a resource allocation manner adapted to the SBFD technology can be implemented. Then, the terminal device and the network device transmit the PUSCH on a corresponding uplink resource and transmit the PDSCH on a corresponding downlink resource according to the first configuration information and the first scheduling information, thereby ensuring effectiveness of resource configuration.

Based on the content described above, various possible specific implementations of the first configuration information and the first scheduling information provided in this application are described below.

First, the first configuration information is described. It may be determined based on the foregoing description that the first configuration information may include time domain position information and frequency domain position information of the BWP in a first transmission direction. The two parts are separately described below.

### 1. Time domain position information in the first configuration information

In a possible implementation, the network device may indicate types of the slots and the symbols by using an SIB or a first RRC configuration message. The types of the slots and the symbols may be, for example, uplink, downlink, flexible, and the like. The first RRC configuration message may be, for example, a time-division duplex - uplink - downlink - common configuration parameter (TDD-UL-DL-ConfigCommon), or may be a time-division duplex - uplink - downlink - dedicated configuration parameter (TDD-UL-DL-ConfigDedicated).

On this basis, when resource granularity of SBFD is slots, the SBFD region includes at least one SBFD slot. The network device may use at least part of slots of a first type indicated by the SIB or the first RRC configuration message as the SBFD slot. The first type is downlink or flexible. Therefore, the time domain position information may be used, for example, to indicate that the at least one first slot is the SBFD slot. The first slot is at least part of the slots of the first type indicated by the SIB or RRC configuration message described above.

In addition, when the resource granularity of SBFD is OFDM/DFT-S-OFDM (discrete Fourier transform spread orthogonal frequency division multiplexing) symbols, the SBBD region includes at least one SBFD symbol. The network device may use at least part of symbols of the first type indicated by the SIB or the first RRC configuration message as the SBFD symbol. The first type is downlink or flexible. Therefore, the time domain position information may be used, for example, to indicate that the at least one first symbol is the SBFD symbol. The first symbol is at least part of the symbols of the first type indicated by the SIB or RRC configuration message described above.

Based on the concepts of the first slot and the first symbol described above, how to specifically indicate the first slot and the first symbol is further to be resolved. Several possible indication manners of the first slot and the first symbol are described below.

### Manner 1: Indication by using a bitmap

For example, the time domain position information may include a first bitmap. The first bitmap includes a plurality of bits. Each bit corresponds to a slot. A bit in the first bitmap whose value is a first value is used to indicate the first slot. The first value may be, for example, 1.

Refer to FIG. 8 for understanding. FIG. 8 is a schematic diagram I of indication of time domain resources according to an embodiment of this application.

As shown in FIG. 8, assuming that a slot 0 to a slot 11 currently exist and that the network device configures the slot 1, the slot 2, the slot 6, the slot 7, and the slot 8 as SBFD slots, bits corresponding to the 5 slots may be 1, and bits of the remaining slots may be 0. Therefore, a first bitmap 011000111000 shown in FIG. 8 may be obtained. 5 bits whose values are 1 respectively indicate respective corresponding first slots.

Alternatively, when an SBFD symbol needs to be configured, each bit in the first bitmap may further correspond to a symbol, and a bit in the first bitmap whose value is the first value is used to indicate the first symbol.

Scalably, when an SBFD subframe or an SBFD frame needs to be configured, each bit in the first bitmap may further correspond to a subframe or frame. A bit in the first bitmap whose value is a first value is used to indicate the first subframe or the first frame. The concept of the first subframe or the first frame may be similar to the concept of the first symbol or the first slot described above.

### Manner 2: Indication by start slot + slot quantity

For example, the time domain position information may include a start slot position and a slot quantity of the at least one first slot, thereby indicating the at least one first slot. In this implementation, the at least one first slot is continuous.

For example, the time domain position information includes a start slot position which is the slot 3 and a slot quantity which is 10. Then, the 10 slots, namely, the slot 3 to the slot 12, may be determined as first slots.

Alternatively, the time domain position information may include a start symbol position and a symbol quantity of the at least one first symbol, thereby indicating the at least one first symbol. In this implementation, the at least one first symbol is continuous.

Scalably, the time domain position information may include a start subframe position and a subframe quantity of the at least one first subframe, thereby indicating the at least one first subframe. Alternatively, the time domain position information may include a start frame position and a frame quantity of the at least one first frame.

### Manner 3: Indication by an RIV

It may be determined with reference to the foregoing description that the RIV may indicate "start + length". Therefore, the slot start position (or symbol start position) and slot quantity (or symbol quantity) that are described above may be indicated by using the RIV.

Specifically, the time domain position information may include a first RIV. The first RIV is used to indicate a slot start position and a slot quantity of the at least one first slot, thereby indicating the first slot.

Alternatively, the time domain position information includes a first RIV. The first RIV is used to indicate a symbol start position and a symbol quantity of the at least one first symbol, thereby indicating the first symbol.

### Manner 4: Indication by using an index value by predefining a mapping relationship between time domain positions and resource indexes

In this implementation, candidate time domain positions and candidate frequency domain positions may be predefined, and then a mapping relationship between the candidate time domain positions, the candidate frequency domain positions, and resource indexes is pre-defined, thereby indicating the first symbol or the first slot by using an index value.

Therefore, the time domain position information may include a first index value, and a slot in a time domain position corresponding to the first index value is the first slot. Alternatively, a symbol in a time domain position corresponding to the first index value is the first symbol.

A possible implementation of a mapping relationship between candidate resources and index values is described below.

In a possible implementation, a time-frequency resource may be used as a candidate resource, and then a resource index is predefined for the whole time-frequency resource. In this case, both a time domain position and a frequency domain time-frequency position of the SBFD region may be indicated by using an index value.

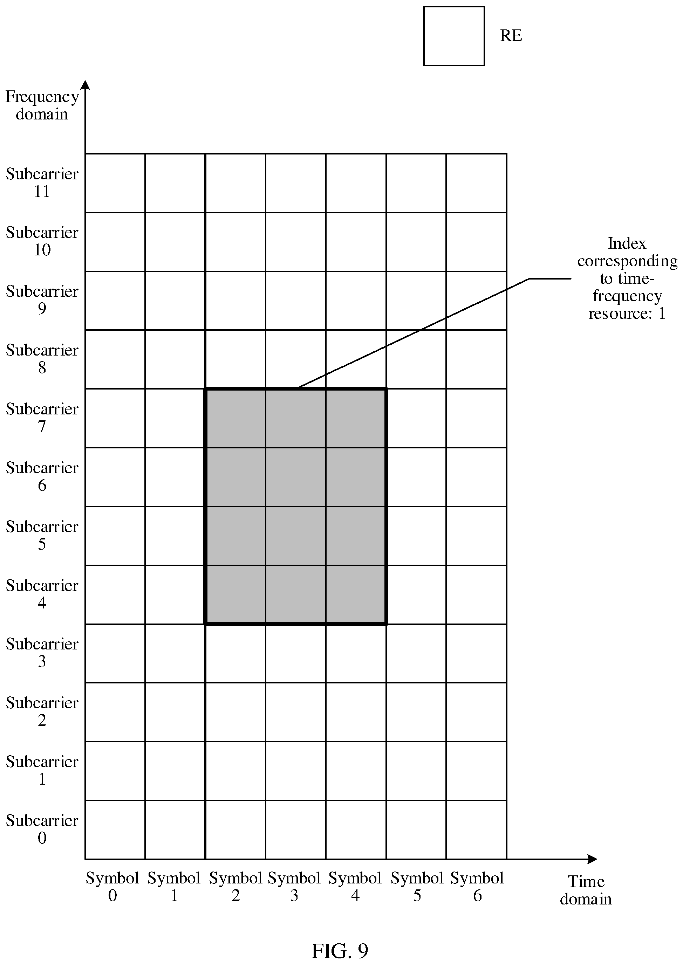

For example, refer to FIG. 9 for understanding based on an example in which the first index value indicates the first symbol. FIG. 9 is a schematic diagram II of indication of time domain resources according to an embodiment of this application.

FIG. 9 shows a resource formed by a plurality of REs. It is assumed that in the resource, a time-frequency resource (a gray part in FIG. 9) corresponding to a time domain range of a symbol 2 to a symbol 4 and a frequency domain range of a subcarrier 4 to a subcarrier 7 is determined as a candidate time-frequency resource, and an index value of 1 is allocated to the candidate time-frequency resource.

For example, if the first index value is set to 1, it may be determined that the time domain position corresponding to the first index value is the symbol 2 to the symbol 4. Therefore, it may be determined that the symbol 2 to the symbol 4 are the first symbols. Moreover, the first index value 1 corresponds to a time-frequency resource, and therefore, may further indicate a frequency domain position of the SBFD region.

Alternatively, only one time domain resource may be used as a candidate resource, and then a resource index is predefined for the time domain resource. In this case, the index value is used only to indicate a time domain position of the SBFD region.

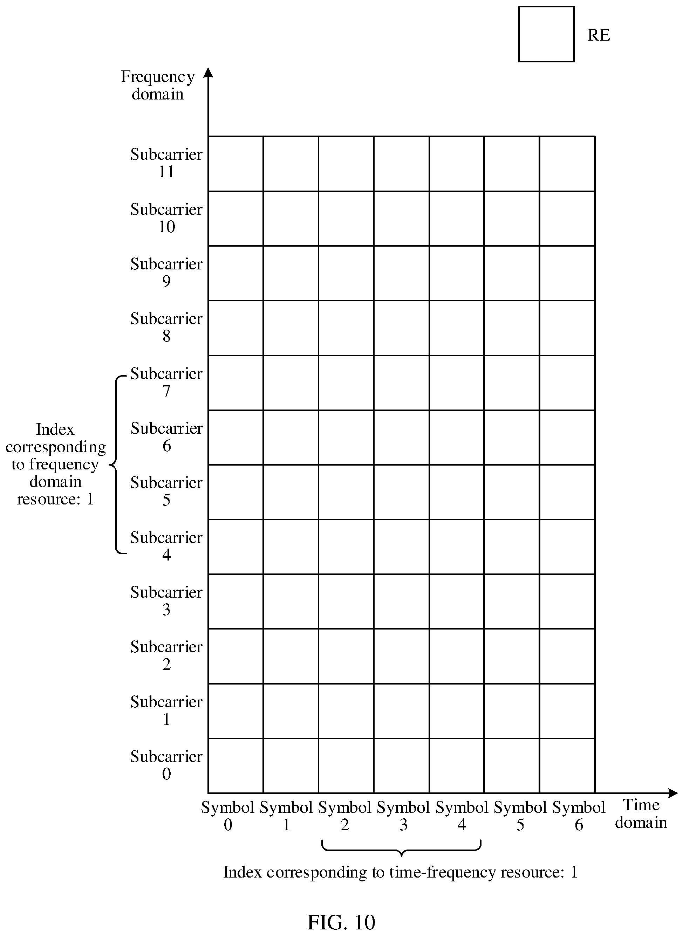

For example, refer to FIG. 10 for understanding based on an example in which the first index value indicates the first symbol. FIG. 10 is a schematic diagram III of indication of time domain resources according to an embodiment of this application.

FIG. 10 shows a resource formed by a plurality of REs. It is assumed that in the resource, a time domain resource corresponding to the time domain range of the symbol 2 to the symbol 4 is determined as a candidate time domain resource, and an index value of 1 is allocated to the candidate time domain resource.

For example, if the first index value is set to 1, it may be determined that the time domain position corresponding to the first index value is the symbol 2 to the symbol 4. Therefore, it may be determined that the symbol 2 to the symbol 4 are the first symbols. In this case, the first index value 1 is used only to indicate the time domain position of the SBFD region, and the frequency domain position of the SBFD region needs to be indicated by using another index value.

It may be understood based on the foregoing description that, in this embodiment of this application, the time domain position of the SBFD region may be indicated in multiple optional manners, thereby effectively implementing a time domain configuration of the SBFD region.

The following further describes the frequency domain position information in the first transmission direction.

### 2. Frequency domain position information in the first configuration information

In this embodiment, the frequency domain position information may specifically indicate frequency domain position information of a BWP in a first transmission direction. The first transmission direction is uplink or downlink.

For downlink transmission, due to the introduction of the SBFD technology, frequency domain configurations of a downlink in the SBFD region and a downlink non-SBFD region differ. In addition, for uplink transmission, the introduction of the SBBD technology also leads to different frequency domain configurations of an uplink in a downlink SBFD region and a downlink non-SBFD region. Then, to ensure effectiveness of resource configuration, different frequency domain configurations need to be respectively indicated for the SBFD region and the non-SBFD region. Processing manners of downlink and uplink are similar. Therefore, the downlink is not distinguished from the uplink in the following expressions. It may be understood that the following solutions are used for the two transmission directions.

In a possible implementation, when an SBFD region exists, an additional BWP configuration parameter may be correspondingly added. That is, one BWP configuration parameter is configured for the non-SBFD region, and another BWP configuration parameter is configured for the SBFD region.

In this implementation, the frequency domain position information may include a first BWP configuration parameter, and the first BWP configuration parameter is used to indicate an uplink BWP frequency domain position or a downlink BWP frequency domain position of the SBFD region. For example, when the first transmission direction is uplink, the first BWP configuration parameter is used to indicate the uplink BWP frequency domain position of the SBFD region. When the first transmission direction is downlink, the first BWP configuration parameter is used to indicate the downlink BWP frequency domain position of the SBFD region.

In another possible implementation, only one BWP configuration parameter may be configured for a region corresponding to the non-SBFD region. When an SBFD region exists, at least one first RB included in an uplink BWP frequency domain position or a downlink BWP frequency domain position of the SBFD region is directly indicated by using frequency domain position information. For example, when the first transmission direction is uplink, the frequency domain position information indicates the at least one first RB included in the uplink BWP frequency domain position of the SBFD region. When the first transmission direction is downlink, the frequency domain position information indicates the at least one first RB included in the downlink BWP frequency domain position of the SBFD region.

For the latter implementation of the frequency domain position information described above, a further problem to be resolved is how the frequency domain position information specifically indicates the first RB. Several possible implementations are separately described below.

### Manner 1: Indication by start RB + RB quantity

It may be determined based on the foregoing description that an RB is classified as a VRB or a PRB. The following separately describes the VRB and the PRB.

When the first RB is a VRB, for example, the frequency domain position information may include a first VRB start position and a first VRB quantity of at least one first VRB, thereby indicating the at least one first VRB. In this implementation, the at least one first VRB is continuous.

When the first RB is a PRB, for example, the frequency domain position information may include a first PRB start position and a first PRB quantity of at least one first PRB, thereby indicating the at least one first PRB. In this implementation, the first PRB indicated by using the first PRB start position and the first PRB quantity is definitely continuous. If a plurality of segments of discontinuous first PRBs are to be configured, the frequency domain position information may further include a second PRB start position and a second PRB quantity of the first PRB.

For example, if the frequency domain position information includes a first PRB start position which is PRB3 and a PRB quantity which is 10, the 10 PRBs, namely, PRB3 to PRB12, may be determined as the first PRBs. Further, the frequency domain position information may further include a second PRB start position which is PRB 18 and a PRB quantity which is 6. Then, 6 PRBs, namely, PRB18 to PRB23, may be determined as the first PRBs, thereby configuring a plurality of segments of discontinuous PRBs (each segment of PRBs is continuous).

### Manner 2: Indication by an RIV

It may be determined with reference to the foregoing description that the RIV may indicate "start + length". Therefore, the RB start position and the RB quantity that are described above may be indicated by using the RIV.

In this implementation, the first RB may be a VRB. The frequency domain position information may include a second RIV, where the second RIV is used to indicate a first VRB start position and a first VRB quantity of the at least one first VRB, thereby indicating the first VRB.

Alternatively, the first RB may be a PRB, and corresponding frequency domain position information may include a third RIV, where the third RIV is used to indicate a first PRB start position and a first PRB quantity of the at least one PRB described above. Based on the same reason as above, the frequency domain position information may further include a fourth RIV, where the fourth RIV is used to indicate a second PRB start position and a second PRB quantity of the at least one PRB described above.

### Manner 3: Indication by using an index value by predefining a mapping relationship between frequency domain positions and resource indexes

Similar to the implementation in the time domain position information, in this implementation, candidate time domain positions and candidate frequency domain positions may be predefined, and then a mapping relationship between the candidate time domain positions, the candidate frequency domain positions, and resource indexes is pre-defined, thereby indicating the first RB by using an index value.

Therefore, the frequency domain position information may include a second index value, and an RB in a frequency domain position corresponding to the second index value is the first RB. The RB herein may be a VRB or may be a PRB.

A possible implementation of a mapping relationship between candidate resources and index values is described below.

In a possible implementation, a time-frequency resource may be used as a candidate resource, and then a resource index is predefined for the whole time-frequency resource. In this case, both a time domain position and a frequency domain time-frequency position of the SBFD region may be indicated by using an index value.

Also referring to FIG. 9, FIG. 9 shows a resource formed by a plurality of REs. It is assumed that in the resource, a time-frequency resource (a gray part in FIG. 9) corresponding to a time domain range of a symbol 2 to a symbol 4 and a frequency domain range of a subcarrier 4 to a subcarrier 7 is determined as a candidate time-frequency resource, and an index value of 1 is allocated to the candidate time-frequency resource.

Then, for example, if the second index value is set to 1, it may be determined that the frequency domain position corresponding to the second index value is the subcarrier 4 to the subcarrier 7. Therefore, it may be determined that RBs in the subcarrier 4 to the subcarrier 7 are first RBs. Moreover, the second index value 1 corresponds to a time-frequency resource, and therefore, may further indicate a time domain position of the SBFD region. In addition, in this case, the second index value herein and the first index value described above are actually a same index value.

Alternatively, only one frequency domain resource may be used as a candidate resource, and then a resource index is predefined for the frequency domain resource. In this case, the index value is used only to indicate a frequency domain position of the SBFD region.

Also referring to FIG. 10, FIG. 10 shows a resource formed by a plurality of REs. It is assumed that in the resource, a frequency domain resource corresponding to a frequency domain range of a subcarrier 4 to a subcarrier 7 is determined as a candidate frequency domain resource, and an index value of 1 is allocated to the candidate frequency domain resource.

Then, for example, if the second index value is set to 1, it may be determined that the frequency domain position corresponding to the second index value is the subcarrier 4 to the subcarrier 7. Therefore, it may be determined that RBs in the subcarrier 4 to the subcarrier 7 are first RBs. In this case, the second index value 1 is used only to indicate the frequency domain position of the SBFD region, and the time domain position of the SBFD region needs to be indicated by using another index value.

It may be understood based on the foregoing description that, in this embodiment of this application, the frequency domain position of the SBFD region may be indicated in multiple optional manners, thereby effectively implementing a frequency domain configuration of the SBFD region.

The foregoing describes possible implementations of the time domain position information and the frequency domain position information in the first configuration information. Further, since an uplink bandwidth in the SBFD region is relatively small compared with an uplink bandwidth in a normal uplink symbol and a downlink bandwidth in the SBFD region is also relatively small compared with a downlink bandwidth in a normal downlink symbol, different RBG sizes may be set for the SBFD region and the non-SBFD region, to meet resource setting requirements of different regions.

Therefore, the first configuration information may further include first indication information, and the first indication information is used to indicate an RBG size set for the SBFD region.

Optionally, if the first configuration information does not include the first indication information, that is, an RBG size is not separately configured for the SBFD region, an RBG size the same as that of the non-SBFD region may be used for the SBFD region.

It may further be determined with reference to the foregoing description that a guard band is further set in the SBFD region. Therefore, the first configuration information may further include second indication information, and the second indication information is used to indicate a frequency domain position of the guard band in the SBFD region. For a specific indication manner of the frequency domain position of the guard band, refer to any one of the frequency domain position indications described above, and details are not described herein again. Alternatively, the frequency domain position of the guard band may be simply indicated. For example, only a quantity of RBs that need to be reserved is indicated. The specific indication manner of the frequency domain position of the guard band may be selected according to an actual requirement. S

The following further describes a manner of sending the first configuration information. The manner of sending the first configuration information may include at least one of the following:
The first configuration information is sent by using an SIB; or the first configuration information is sent by using RRC signaling, where the RRC signaling may include cell-common signaling and UE-specific signaling. Alternatively, the first configuration information may be sent by using DCI, where the DCI includes group-common DCI and UE-specific DCI.

The content described above is various possible implementations of the first configuration information. Various possible implementations of the first scheduling information are described below.

It may be understood that the first scheduling information may be uplink scheduling information, and is used to indicate a resource position of a PUSCH. Alternatively, the first scheduling information may be downlink scheduling information, and is used to indicate a resource position of a PDSCH. However, since internal implementations of the uplink scheduling information and the downlink scheduling information are similar, the following content is entirely described by using the first scheduling information as an object, and differences between uplink and downlink are separately introduced.

For uplink scheduling and downlink scheduling, there is a difference between single-TTI (transmission time interval) scheduling and multi-TTI scheduling. It is assumed that scheduling is performed by using slots as granularity. The single-TTI scheduling means that one DCI schedules the PDSCH of one slot, and the multi-TTI means that one DCI continuously schedules PDSCHs of a plurality of slots.

For the single-TTI scheduling, when a scheduled slot includes common symbols (such as uplink symbols and downlink symbols) and SBFD symbols, a situation in which one scheduling involves both the SBFD region and the non-SBFD region may occur. For the multi-TTI scheduling, a plurality of scheduled slots may include common slots (such as uplink slots and downlink slots) and SBFD slots. Therefore, the situation in which one scheduling involves both the SBFD region and the non-SBFD region may also occur. Therefore, regardless of the single-TTI or multi-TTI scheduling, one scheduling may involve both the SBFD region and the non-SBFD region. Therefore, there is a need to consider separately performing resource configuration for the first channel in the SBFD region and the non-SBFD region.

Therefore, the following separately describes multiple possible implementations of the first scheduling information for the situations of the single-TTI scheduling and the multi-TTI scheduling. In addition, it should be further noted in advance that the first scheduling information may indicate a resource position of the first channel. The resource position includes a time domain position and a frequency domain position. Indication of frequency domain resource of the first channel is mainly affected by the introduction of the SBFD technology. Therefore, this application focuses on describing a manner in which the first scheduling information indicates the frequency domain position of the first channel. For a manner in which the first scheduling information indicates the time domain position of the first channel, refer to the description in the related art, and details are not described herein again.

In a possible implementation, the first scheduling information is used to indicate at least one second RB, where the second RB is an RB occupied by the first channel in the SBFD region.

Specifically, when downlink scheduling is performed, the first channel is a PDSCH, and the corresponding second RB is an RB occupied by the PDSCH in the SBFD region. Moreover, when uplink scheduling is performed, the first channel is a PUSCH, and the corresponding second RB is an RB occupied by the PUSCH in the SBFD region.

In addition, in this implementation, for a manner of indicating frequency domain resources occupied by the first channel in the non-SBFD region, refer to existing frequency domain resource configuration of downlink scheduling or uplink scheduling. Details are not described herein again.

Based on the concept of the second RB described above, how the first scheduling information specifically indicates the second RB is further to be resolved.

It may be determined with reference to the description of the foregoing embodiments that the frequency domain resource allocation includes two types, which are respectively type0 and type1. Implementations of the two resource allocation types are separately described below.

First, when the resource allocation type is a first type (for example, type0), the first scheduling information may include a second bitmap. The second bitmap includes a plurality of bits, and each bit corresponds to an RBG. A bit in the second bitmap whose value is a first value is used to indicate a first RBG, and RBs included in the first RBG are the second RBs described above.

For example, referring to the foregoing description in FIG. 3, assuming that values of bits corresponding to RBG2, RBG14, RBG15, and RBG18 are the first value, it may be determined that the 4 RBGs are first RBGs, and further, it may be determined that RBs included in the 4 RBGs are second RBs, that is, RBs occupied by first signaling in the non-SBFD region.

Secondly, when the resource allocation type is a second type (for example, type1), the first scheduling information may indicate at least one second RB by a start RB + an RB quantity. In this case, the second RB may be a VRB.

In addition, it may be determined with reference to the foregoing descriptions in FIG. 6A to FIG. 6D that the downlink subbands in the SBFD region may be continuous (referring to the situations in FIG. 6A, FIG. 6B, and FIG. 6D), and the downlink subbands in the SBFD region may also be discontinuous (referring to the situation in FIG. 6C).

In an example in which the first channel is a PDSCH, when a frequency domain position of the PDSCH is configured in the SBFD region where the downlink subbands are continuous, in a possible scenario, the PDSCH may be continuous in frequency domain of the SBFD region. However, when the frequency domain position of the PDSCH is configured in the SBFD region where the downlink subbands are discontinuous, in a possible scenario, if the PDSCH is configured in two discontinuous downlink subbands, the PDSCH may be discontinuous in the frequency domain of the SBFD region. A situation is similar when the first channel is a PUSCH, and therefore details are not described again.

The following separately describes two cases in which the first channel is continuous and discontinuous in the frequency domain of the SBFD region.

### Case I: The first channel is continuous in the frequency domain of the SBFD region

In this case, the first scheduling information may include a fifth RIV, where the fifth RIV is used to indicate a second VRB start position and a second VRB quantity of at least one second VRB, to indicate at least one continuous second VRB.

Alternatively, the first scheduling information may further directly include the second VRB start position and the second VRB quantity, to indicate the at least one continuous second VRB.

### Case II: The first channel is discontinuous in the frequency domain of the SBFD region

This case may be subdivided into the following three indication manners:
Manner 1: The first scheduling information includes a sixth RIV, where the sixth RIV indicates a third VRB start position and a third VRB quantity. The two parameters, namely, the third VRB start position and the third VRB quantity, may indicate a plurality of continuous VRBs. The second VRB in this embodiment is a VRB remaining after VRBs corresponding to an invalid region are removed from a plurality of continuous VRBs, where the invalid region is a frequency region corresponding to a second transmission direction and a guard band region.

The second transmission direction in this embodiment is a transmission direction opposite to a transmission direction corresponding to the first channel. When the first channel is a PDSCH, if the transmission direction corresponding to the first channel is downlink, the second transmission direction is uplink. When the first channel is a PUSCH, if the transmission direction corresponding to the first channel is uplink, the second transmission direction is downlink.

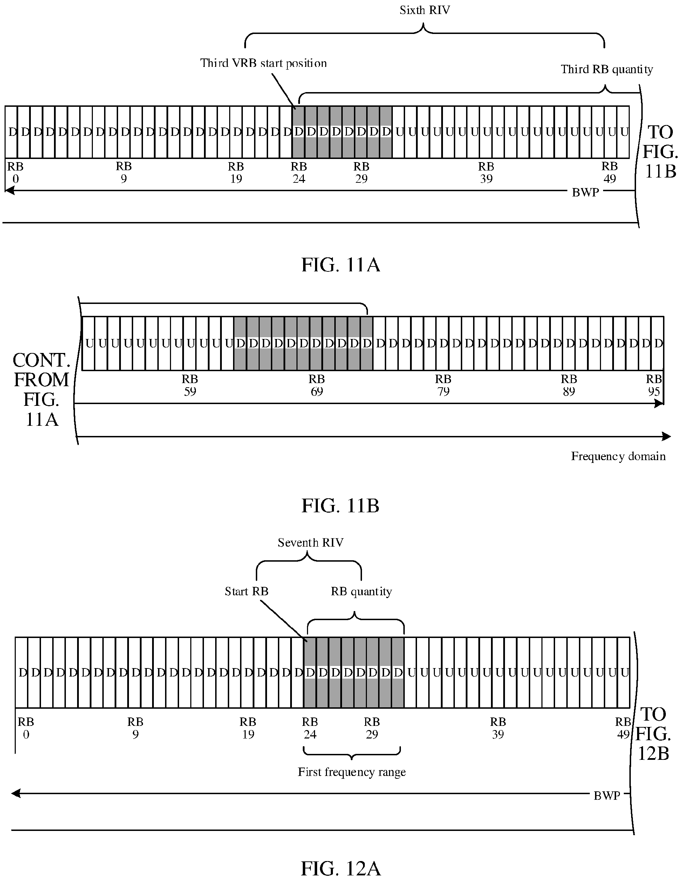

In an example in which the first channel is a PDSCH and the corresponding second transmission direction is uplink, refer to FIG. 11A and FIG. 11B for understanding of this case. FIG. 11A and FIG. 11B are a schematic diagram I of indication of discontinuous frequency domain resources according to an embodiment of this application.

As shown in FIG. 11A and FIG. 11B, it is assumed that the sixth RIV currently indicates that the third VRB start position is VRB24 and indicates that the third VRB quantity is 50. Then, a plurality of continuous VRBs indicated by the third VRB start position (VRB24) and the third VRB quantity (50) are VRB24 to VRB73 shown in FIG. 11A and FIG. 11B.

In VRB24 to VRB73, VRB32 to VRB62 are an uplink frequency region. Therefore, VRB32 to VRB62 are determined as VRBs corresponding to the invalid region. In the plurality of continuous VRBs, namely, VRB24 to VRB73, VRB32 to VRB62 corresponding to the invalid region are removed, and remaining VRBs are VRB24 to VRB31 and VRB63 to VRB73. Therefore, in this implementation, two segments of continuous VRBs may be indicated by using one RIV, to reduce signaling overhead.

Manner 2: The first scheduling information includes at least two seventh RIVs, and any of the seventh RIVs is used to indicate a segment of continuous second VRBs.

In an example in which the first channel is a PDSCH, when downlink subbands are discontinuous, configuration of the PDSCH in the discontinuous downlink subbands needs to be supported. Then, a specific configuration status of the PDSCH in each segment of downlink subbands needs to be separately indicated. Therefore, the first scheduling information may include at least two seventh RIVs. Each of the seventh RIVs corresponds to a segment of continuous downlink subbands, and the seventh RIV may indicate a segment of continuous second VRBs in the corresponding downlink subbands, to implement frequency domain indication for the PDSCH. An implementation in which the RIV indicates the VRB is similar to that described above, and details are not described herein again.

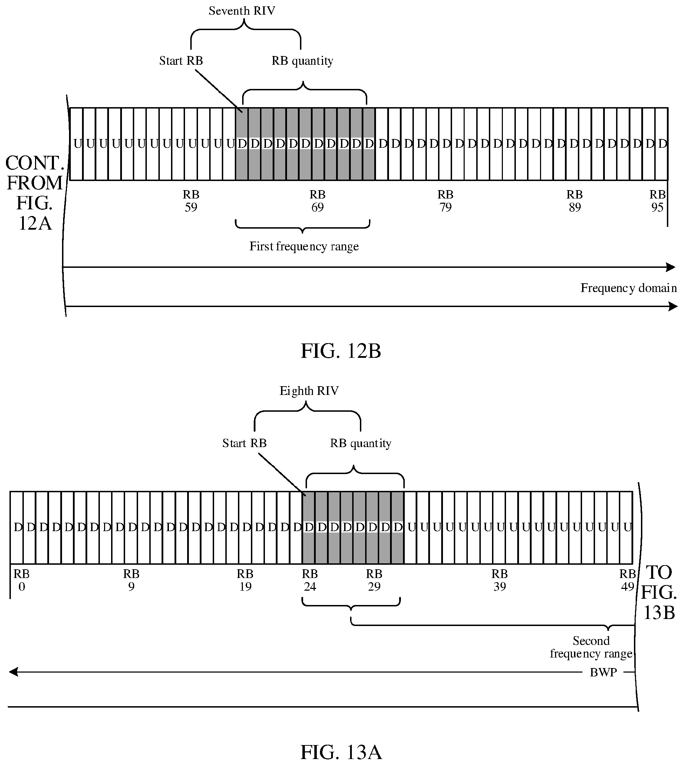

In an example in which the first channel is a PDSCH, refer to FFIG. 12A and FIG. 12B for understanding of this case. FIG. 12A and FIG. 12B are a schematic diagram II of indication of discontinuous frequency domain resources according to an embodiment of this application.

As shown in FIG. 12Aand FIG. 12B, it is assumed that current VRB0 to VRB31 are a first downlink subband, VRB32 to VRB62 are an uplink subband, and VRB63 to VRB95 are a second downlink subband. In addition, when the PDSCH needs to be configured in both the first downlink subband and the second downlink subband, two seventh RIVs may be set, to respectively indicate continuous second VRBs in the first downlink subband and continuous second VRBs in the second downlink subband.

As shown in FIG. 12Aand FIG. 12B, VRB24 to VRB31 are the second VRBs in the first downlink subband, and VRB64 to VRB73 are the second VRBs in the second downlink subband.

Moreover, when VRBs are configured, VRB-to-PRB interleaved mapping needs to be performed. In the current implementation, when VRB-to-PRB interleaved mapping is performed, for any seventh RIV, interleaved mapping may be performed on the second VRBs indicated by the seventh RIV in a first frequency range. The first frequency range is a frequency range individually indicated by the seventh RIV. That is, independent mapping is performed on the second VRBs indicated by each seventh RIV.

For example, in the example in FIG. 12Aand FIG. 12B, for VRB24 to VRB31 indicated by the first seventh RIV, the corresponding first frequency range is RB24 to RB31. Therefore, interleaved mapping is performed within the range of PRB24 to PRB31. In addition, for VRB64 to VRB73 indicated by the second seventh RIV, the corresponding first frequency range is RB64 to RB73. Therefore, interleaved mapping is kept in the range of PRB64 to PRB73.

Manner 3: The first scheduling information includes at least two eighth RIVs, and any of the eighth RIVs is used to indicate a segment of continuous second VRBs.

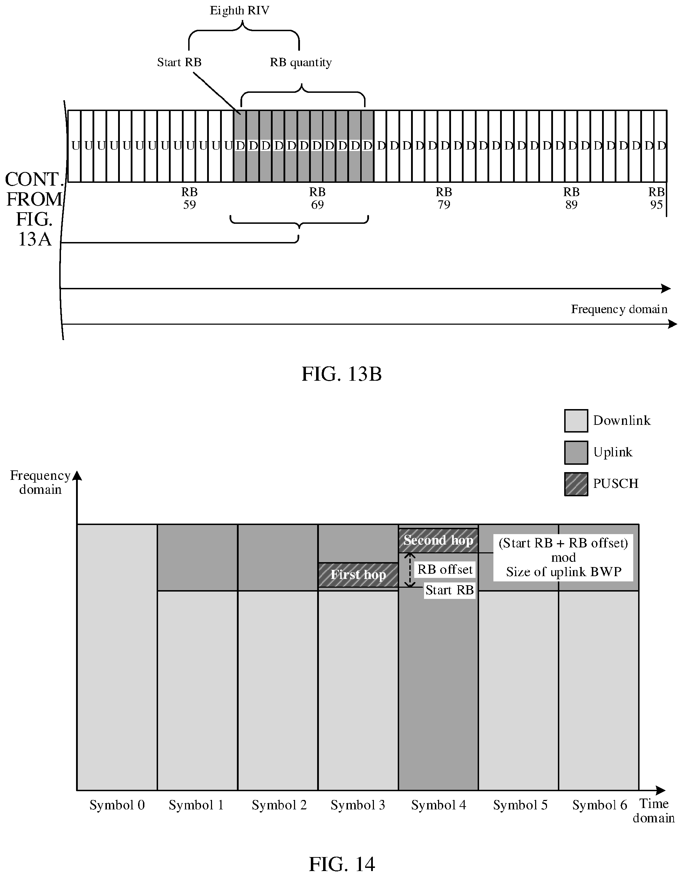

An implementation of Manner 3 is similar to that of Manner 2 described above. Specific implementations are not described herein again. Refer to FIG. 13A and FIG. 13B for understanding of an example. FIG. 13A and FIG. 13B are a schematic diagram III of indication of discontinuous frequency domain resources according to an embodiment of this application.

Also in an example in which the first channel is a PDSCH, as shown in FIG. 13A and FIG. 13B, when the PDSCH needs to be configured in both the first downlink subband and the second downlink subband, two eighth RIVs may be set, to respectively indicate continuous second VRBs in the first downlink subband and continuous second VRBs in the second downlink subband.

VRB24 to VRB31 are the second VRBs in the first downlink subband, and VRB64 to VRB73 are the second VRBs in the second downlink subband.

A difference between Manner 2 and Manner 3 lies in the implementation of the interleaved mapping. In the current implementation, when VRB-to-PRB interleaved mapping is performed, for any eighth RIV, interleaved mapping may be performed on the second VRBs indicated by the eighth RIV in a second frequency range. The second frequency range is a frequency range jointly indicated by the at least two eighth RIVs. That is, joint mapping is performed on the second VRBs indicated by each eighth RIV.

For example, in the example in FIG. 13A and FIG. 13B, for VRB24 to VRB31 indicated by the first eighth RIV, the corresponding frequency range is RB24 to RB31, and for VRB64 to VRB73 indicated by the second eighth RIV, the corresponding frequency range is RB64 to RB73. Therefore, the frequency range jointly indicated by the two eighth RIVs is RB24 to RB31 and RB64 to RB73 shown in FIG. 13A and FIG. 13B. Therefore, interleaved mapping may be performed on the second VRBs respectively indicated by the two eighth RIVs in the frequency range of RB24 to RB31 and RB64 to RB73.

It should be noted that when interleaved mapping is performed on the VRBs, the frequency range corresponding to the invalid region is not counted into a range of interleaved mapping, to ensure correctness of interleaved mapping.

It may be understood based on the foregoing description that, in this embodiment of this application, the first scheduling information may indicate the frequency domain configuration of the first channel in both the SBFD region and the non-SBFD region in multiple optional manners, thereby effectively implementing a frequency domain configuration manner adapted to the SBFD technology. The frequency domain configuration manner of the first channel described above may be applied to single-TTI scheduling or may be applied to multi-TTI scheduling, which is not limited in this application, but preferably may be applied to a single-TTI scheduling scenario.

Next, another possible implementation of the first scheduling information is described.

Manner 1: Two FDRAs (Frequency Domain Resource Allocation) are configured in the first scheduling information, thereby separately indicating the frequency domain configuration of the first channel in the SBFD region and the non-SBFD region.

Specifically, a first FDRA and a second FDRA may be configured in the first scheduling information. The first FDRA is used to indicate at least one third RB occupied by the first channel in a first region, and the second FDRA is used to indicate at least one fourth RB occupied by the first channel in a second region.

The first region may be a non-SBFD region, and the second region may be an SBFD region. Alternatively, the first region may be an SBFD region, and the second region may be a non-SBFD region.

Manner 2: only one FRRA is configured in the first scheduling information. The FDRA is used to indicate at least one third RB occupied by the first channel in a first region, and is further used to indicate at least one fourth RB occupied by the first channel in a second region.

Similarly, the first region may be a non-SBFD region, and the second region may be an SBFD region. Alternatively, the first region may be an SBFD region, and the second region may be a non-SBFD region.

Manner 2 may be further subdivided into processing manners when the resource allocation types are type0 and type1.

When the resource classification type is type0, the first FDRA may include a third bitmap. The third bitmap includes a plurality of bits, and each bit corresponds to an RBG. A bit in the third bitmap whose value is a first value is used to indicate an RBG corresponding to the first region (including the third RB described above), and is also used to indicate an RBG corresponding to the second region (including the fourth RB described above).

That is, a same frequency domain resource indication field, that is, the third bitmap, is used for the first region and the second region, so that on the one hand, the third RB occupied by the first channel in the first region is indicated, and the fourth RB occupied by the first channel in the second region may be mapped.

Further, it may be determined based on the foregoing description that there is a difference between downlink (or uplink) bandwidths in the SBFD region and the non-SBFD region. Then, when frequency domain positions of the first channel in the first region and the second region are indicated based on the same indication field (the third bitmap), to ensure adaption to respective bandwidth conditions of the two regions, respective corresponding RBG sizes may be set for the first region and the second region respectively.

Correspondingly, for the first region, the RBG size configured for the first region is applied, and for the second region, the RBG size configured for the second region is applied, to implement indication of different frequency domain positions based on a same indication field, and the frequency domain positions of the first channel indicated in the first region and the second region are both adapted to the bandwidth of the current region.

Moreover, when the resource allocation type is type1, the third RB and the fourth RB described above may be VRBs. In this case, it may be set that the first FDRA includes the fourth RIV. The fourth RIV may indicate a fourth VRB start position and a fourth VRB quantity of the at least one third VRB corresponding to the first region, to indicate a frequency domain position of the first channel in the first region.

In addition, the network device may further configure a first coefficient α and a second coefficient β for the terminal device. Alternatively, the first coefficient α and the second coefficient β may be agreed by a protocol.

Then, a product of a fourth VRB start position indicated by a ninth RIV and the first coefficient α is determined as a start VRB of at least one fourth VRB. In addition, a product of a fourth VRB quantity indicated by the ninth RIV and the second coefficient β is determined as a start VRB of the at least one fourth VRB. In this manner, the at least one fourth VRB is indicated, thereby implementing mapping of the frequency domain position of the first channel in the second region.

It may be understood based on the foregoing description that, in this embodiment of this application, the first scheduling information may indicate the frequency domain configuration of the first channel in both the SBFD region and the non-SBFD region in multiple optional manners, thereby effectively implementing a frequency domain configuration manner adapted to the SBFD technology. The frequency domain configuration manner of the first channel described above may be applied to single-TTI scheduling or may be applied to multi-TTI scheduling, which is not limited in this application, but preferably may be applied to a multi-TTI scheduling scenario.

Based on the content described above, the PUSCH further relates to frequency hopping processing. Since a transmission bandwidth of an uplink channel is relatively small and frequency diversity is insufficient, additional frequency diversity gain is generally obtained by frequency hopping. Frequency hopping may be divided into intra-slot frequency hopping and inter-slot frequency hopping. The intra-slot frequency hopping refers to performing PUSCH frequency hopping in one slot, and the inter-slot frequency hopping refers to performing PUSCH frequency hopping across slots.

After the introduction of the SBFD technology, PUSCH frequency hopping may relate to a case in which frequency hopping is performed from the SBFD region to the non-SBFD region, and a case in which frequency hopping is performed from the non-SBFD region to the SBFD region.

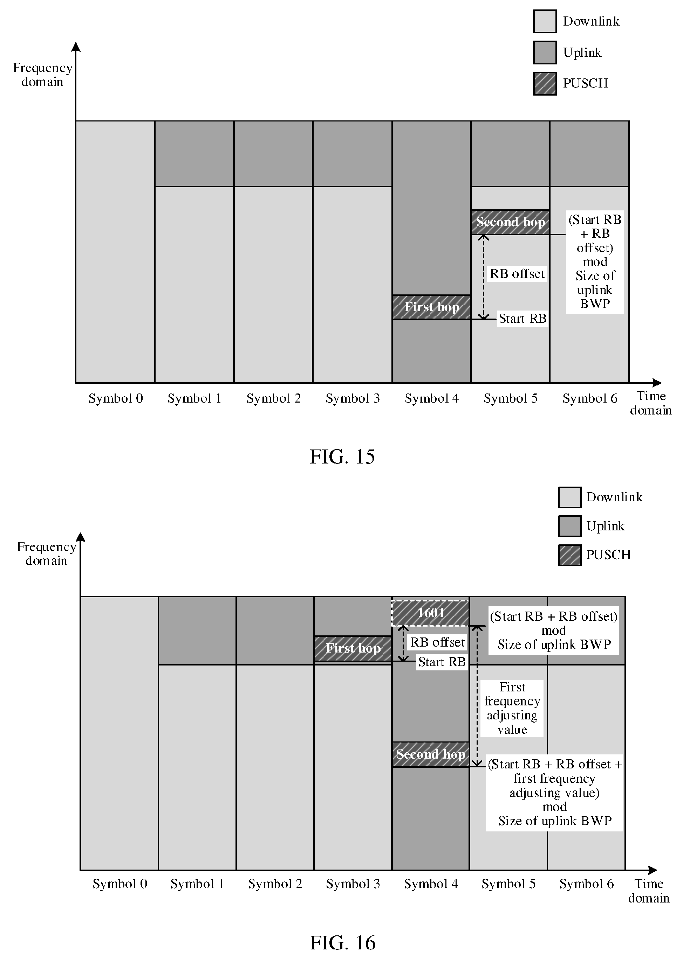

The two cases may be understood with reference to FIG. 14 and FIG. 15. FIG. 14 is a schematic diagram I of PUSCH frequency hopping processing according to an embodiment of this application, and FIG. 15 is a schematic diagram II of PUSCH frequency hopping processing according to an embodiment of this application.

First, the case in which frequency hopping is performed from the SBFD region to the non-SBFD region is described with reference to FIG. 14.

Referring to FIG. 14, it is assumed that FIG. 14 shows a plurality of symbols included in a slot (not all symbols in the slot are shown). Specifically, FIG. 14 shows a symbol 0 to a symbol 6 in a slot. It is assumed that the symbol 0 is a downlink symbol, the symbol 4 is an uplink symbol, and the symbol 1, the symbol 2, the symbol 3, the symbol 5, and the symbol 6 are SBFD symbols. Each SBFD symbol may be further subdivided into an uplink SBFD symbol and a downlink SBFD symbol. For example, for the symbol 1, an uplink subband part in the symbol 1 corresponds to the uplink SBFD symbol, and a downlink subband part in the symbol 1 corresponds to the downlink SBFD symbol.

When intra-slot frequency hopping is performed, a start RB of a first hop is an RB indicated by a parameter, namely, an RB start position (RBₛₜₐᵣₜ), a start RB of a second hop is an RB indicated by a result of a modulo operation of an RB start position + an RB offset (RB_{offset}) on a size of an uplink BWP ( ${N}_{BWP}^{size}$), that is, ${RB}_{start} = \left.\left({RB}_{start}+{RB}_{offset}\right)mod {N}_{BWP}^{size}\right)$ .

The RB offset may be indicated by the network device to the terminal device. For example, the network device may configure only one RB offset for the terminal device, and then frequency hopping in the SBFD region and the non-SBFD region both use the RB offset. Alternatively, the network device may configure a first RB offset and a second RB offset for the terminal device. The first RB offset is an offset value used when frequency hopping is performed from the SBFD region, and the second RB offset is an offset value used when frequency hopping is performed from the non-SBFD region, which is not limited in this embodiment.

Then, referring to FIG. 14, assuming that the first hop of the PUSCH is located in the uplink subband part of the symbol 3 when frequency hopping processing is performed, on the symbol 3, the start RB of the PUSCH is an RB indicated by the parameter, namely, the RB start position. In addition, assuming that the second hop of the PUSCH is located on the symbol 4, on the symbol 4, a start RB of the PUSCH is an RB indicated by a result of a modulo operation of a sum of two parameters, namely, the RB start position + the RB offset, on a size of an uplink BWP of the symbol 4.

However, referring to FIG. 14, it may be understood that an uplink bandwidth range of the symbol 4 is very large. However, since frequency hopping is performed from the SBFD region to the non-SBFD region, PUSCH frequency hopping is still limited to execution in a very small uplink bandwidth range. Then, gain brought by a relatively wide uplink bandwidth of the symbol 4 cannot be obtained by frequency hopping.

Next, the case in which frequency hopping is performed from the non-SBFD region to the SBFD region is described with reference to FIG. 15.

Referring to FIG. 15, assuming that FIG. 15 shows a plurality of symbols included in a slot (not all symbols in the slot are shown), the symbols in FIG. 15 are similar to those described in FIG. 14, and details are not described herein again.

Based on the processing manner of intra-slot frequency hopping described above, referring to FIG. 15, assuming that the first hop of the PUSCH is located on the symbol 4 when frequency hopping processing is performed, on the symbol 4, a start RB of the PUSCH is an RB indicated by the parameter, namely, an RB start position. In addition, assuming that the second hop of the PUSCH is located on the symbol 5, on the symbol 5, a start RB of the PUSCH is an RB indicated by a result of a modulo operation of a sum of two parameters, namely, the RB start position + the RB offset, on a size of an uplink BWP of the symbol 5.

However, referring to FIG. 15, it may be understood that, since the symbol 5 is an SBFD symbol, an uplink bandwidth range of the symbol 5 is relatively small. However, since frequency hopping is performed from the non-SBFD region to the SBFD region, the PUSCH after frequency hopping exceeds an uplink subband part of the symbol 5, thereby causing anomalies in uplink resources after frequency hopping.

For respective problems existing in the two cases described above, this application further provides an optimization manner for frequency hopping processing after the introduction of the SBFD technology. In this application, a specific optimization policy for frequency hopping processing is further described below.

The network device may further send a frequency hopping parameter to the terminal device. The frequency hopping parameter includes a first frequency adjusting value for hopping from the SBFD region to the non-SBFD region, and further includes a second frequency adjusting value for hopping from the non-SBFD region to the SBFD region.

A purpose of setting the first frequency adjusting value is to widen the uplink bandwidth in the case of hopping from the SBFD region to the non-SBFD region. Therefore, a lower limit of an available frequency of the PUSCH may be lowered by using the first frequency adjusting value, so as to perform PUSCH transmission over more optional frequency ranges. In addition, a purpose of setting the second frequency adjusting value is to narrow the uplink bandwidth in the case of hopping from the non-SBFD region to the SBFD region. Therefore, a range of the available frequency of the PUSCH needs to be adjusted to the uplink subband of the SBFD region by using the second frequency adjusting value, to ensure normal operation of uplink transmission.

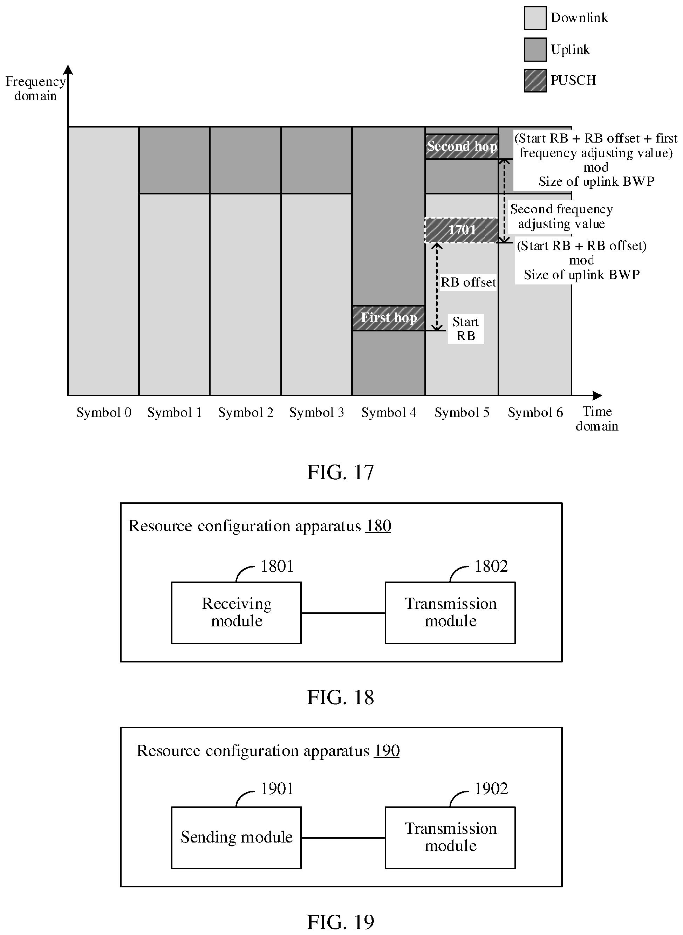

Specific application of the first frequency adjusting value and the second frequency adjusting value is further described below with reference to FIG. 16 and FIG. 17. FIG. 16 is a schematic diagram I of PUSCH frequency hopping processing according to an embodiment of this application, and FIG. 15 is a schematic diagram II of PUSCH frequency hopping processing according to an embodiment of this application.

First, the case in which frequency hopping is performed from the SBFD region to the non-SBFD region is described with reference to FIG. 16.

Referring to FIG. 16, assuming that FIG. 16 shows a plurality of symbols included in a slot (not all symbols in the slot are shown), the symbols in FIG. 16 are similar to those described in FIG. 14, and details are not described herein again.

In this embodiment, when intra-slot frequency hopping is performed, the start RB of the first hop is an RB indicated by a parameter, namely, an RB start position (RBₛₜₐᵣₜ) in the first scheduling information, and the start RB of the second hop is an RB indicated by a modulo operation of a sum of the RB start position + the RB offset (RB_{offset}) + the first frequency adjusting value (RB*_{adjusting}*) on a size of an uplink BWP of the non-SBFD region ( ${N}_{BWP}^{size}$). Processing of the intra-slot frequency hopping may be represented by using Formula I below: ${RB}_{start} = \left\{\begin{matrix}{RB}_{start} & i = 0 \\ {RB}_{start} = \left({RB}_{start}+{RB}_{offset}+{RB}_{adjusting}\right) mod {N}_{BWP}^{size} & i = 1\end{matrix}\right.$
where i=0 indicates the first hop, and i=1 indicates the second hop.

Then, referring to FIG. 16, assuming that the first hop of the PUSCH is located in the uplink subband part of the symbol 3 when frequency hopping processing is performed, on the symbol 3, the RB start position of the PUSCH is an RB indicated by the start RB. In addition, assuming that the second hop of the PUSCH is located on the symbol 4, on the symbol 4, if a modulo operation is performed on the size of the uplink BWP directly according to a sum of the two parameters, namely, the start RB + the RB offset, an RB indicated by a result of the modulo operation is a start RB corresponding to 1601 in FIG. 16, which has the problem described above.

Moreover, in the technical solution of this application, on the basis of the start RB + the RB offset, the first frequency adjusting value is further added, thereby obtaining a second-hop PUSCH on the symbol 4 as shown in FIG. 16. The RB start position thereof is an RB indicated by a modulo operation of a sum of the RB start position + the RB offset + the first frequency adjusting value on the size of the uplink BWP of the symbol 4.

Referring to FIG. 16, it may be determined that, after the first frequency adjusting value is added, when frequency hopping from the SBFD region to the non-SBFD region is implemented, an available frequency range of the PUSCH after frequency hopping may be extended, to achieve a purpose of obtaining additional frequency diversity gain.

Next, the case in which frequency hopping is performed from the non-SBFD region to the SBFD region is described with reference to FIG. 17.

Referring to FIG. 17, assuming that FIG. 17 shows a plurality of symbols included in a slot (not all symbols in the slot are shown), the symbols in FIG. 17 are similar to those described in FIG. 14, and details are not described herein again.

In this embodiment, when intra-slot frequency hopping is performed, the start RB of the first hop is an RB indicated by a parameter, namely, an RB start position (RBₛₜₐᵣₜ) in the first scheduling information, and the start RB of the second hop is an RB indicated by a modulo operation of a sum of the RB start position + the RB offset (RB_{offset}) + the second frequency adjusting value (RB*_{adjusting}*) on a size of an uplink BWP of the SBFD region ( ${N}_{BWP}^{size}$). For a formula expression, still refer to Formula I above.

Then, referring to FIG. 17, assuming that the first hop of the PUSCH is located on the symbol 4 when frequency hopping processing is performed, on the symbol 4, the RB start position of the PUSCH is an RB indicated by the start RB. In addition, assuming that the second hop of the PUSCH is located on the symbol 5, on the symbol 5, if a modulo operation is performed on the size of the uplink BWP directly according to a sum of the two parameters, namely, the start RB + the RB offset, an RB indicated by a result of the modulo operation is a start RB corresponding to 1701 in FIG. 17, which has the problem described above.

Moreover, in the technical solution of this application, On the basis of the start RB + the RB offset, the second frequency adjusting value is further added, thereby obtaining a second-hop PUSCH on the symbol 5 as shown in FIG. 17. The RB start position thereof is an RB indicated by a modulo operation of a sum of the RB start position + the RB offset + the first frequency adjusting value on the size of the uplink BWP of the symbol 5.

Referring to FIG. 17, it may be determined that, after the second frequency adjusting value is added, when frequency hopping from the non-SBFD region to the SBFD region is implemented, it is ensured that the PUSCH after frequency hopping is located in the uplink subband part of the SBFD region, thereby ensuring normal transmission of the PUSCH.

The foregoing describes a processing manner of the intra-slot frequency hopping. The inter-slot frequency hopping is further subdivided into the following two cases:
Case 1: for inter-slot frequency hopping with pusch-dmrs-bundling not enabled, or for inter-slot frequency hopping of a PUSCH scheduled by an RAR (Random Access Response) uplink grant, or for inter-slot frequency hopping with a DCI format 0_0 with CRC scrambled by a TC-RNTI (Temporary Cell Radio Network Temporary Identifier), inter-slot frequency hopping is generally performed with slots as frequency hopping granularity.

A specific frequency hopping policy may be that a start RB of even-numbered slots is an RB indicated by the parameter, namely, the RB start position (RBₛₜₐᵣₜ), a start RB of odd-numbered slots is an RB indicated by a result of a modulo operation of the RB start position + the RB offset on a size of an uplink BWP, that is, ${RB}_{start} = \left({RB}_{start}+{RB}_{offset}\right) mod {N}_{BWP}^{size}$)*.* The even-numbered slots or the odd-numbered slots herein refer to slots whose numbers are even or odd.

Such an implementation also has the problems described above. Therefore, this application provides the following processing policy for the inter-slot frequency hopping in the current case:
For inter-slot frequency hopping from the SBFD region to the non-SBFD region, a start RB of even-numbered slots is an RB indicated by a parameter, namely, an RB start position (RBₛₜₐᵣₜ) in the first scheduling information, and a start RB of odd-numbered slots is an RB indicated by a modulo operation of a sum of the RB start position + the RB offset (RB_{offset}) + the first frequency adjusting value (RB*_{adjusting}*) on a size of an uplink BWP of the non-SBFD region ( ${N}_{BWP}^{size}$).

In addition, for inter-slot frequency hopping from the non-SBFD region to the SBFD region, the start RB of the even-numbered slots is the RB indicated by the parameter, namely, the RB start position (RBₛₜₐᵣₜ) in the first scheduling information, and the start RB of the odd-numbered slots is an RB indicated by a modulo operation of a sum of the RB start position + the RB offset (RB_{offset}) + the second frequency adjusting value (RB*_{adjusting}*) on a size of an uplink BWP of the SBFD region ( ${N}_{BWP}^{size}$).

Processing of the inter-slot frequency hopping may be represented by using Formula II below: ${RB}_{start} = \left\{\begin{matrix}{RB}_{start} & {n}_{s}^{μ} mod 2 = 0 \\ {RB}_{start} = \left({RB}_{start}+{RB}_{offset}+{RB}_{adjusting}\right) mod {N}_{BWP}^{size} & {n}_{s}^{μ} mod 2 = 1\end{matrix}\right.$
where ${n}_{s}^{μ}$ denotes a slot number, ${n}_{s}^{μ} mod 2 = 0$ represents an even-numbered slot, and ${n}_{s}^{μ} mod 2 = 1$ represents an odd-numbered slot.

By using this implementation, it can be ensured that the beneficial effect described above is also achieved for inter-slot frequency hopping.

Case 2: For inter-slot frequency hopping with pusch-dmrs-bundling enabled, or for inter-slot frequency hopping of a PUSCH not scheduled by an RAR uplink grant, or for inter-slot frequency hopping of a DCT format 0_0 with CRC not scrambled by a TC-RNTI, generally, slots are grouped, and then inter-slot-group frequency hopping is performed by using slot groups as frequency hopping granularity.

A specific frequency hopping policy may be that a start RB of slots in even-numbered groups is an RB indicated by the parameter, namely, the RB start position (RBₛₜₐᵣₜ), a start RB of slots in odd-numbered groups is an RB indicated by a result of a modulo operation of the RB start position + the RB offset on a size of an uplink BWP, that is, ${RB}_{start} = \left({RB}_{start}+{RB}_{offset}\right) mod {N}_{BWP}^{size}$). The slots in the even-numbered groups or the slots in the odd-numbered groups herein refer to slots whose group numbers are even or odd.

Such an implementation also has the problems described above. Therefore, this application provides the following processing policy for the inter-slot-group frequency hopping in the current case:
For inter-slot-group frequency hopping from the SBFD region to the non-SBFD region, a start RB of slots in even-numbered groups is an RB indicated by a parameter, namely, an RB start position (RBₛₜₐᵣₜ) in the first scheduling information, and a start RB of slots in odd-numbered groups is an RB indicated by a modulo operation of a sum of the RB start position + the RB offset (RB_{offset}) + the first frequency adjusting value (RB*_{adjusting}*) on a size of an uplink BWP of the non-SBFD region ( ${N}_{BWP}^{size}$).

In addition, for inter-slot-group frequency hopping from the non-SBFD region to the SBFD region, the start RB of the slots in the even-numbered groups is the RB indicated by the parameter, namely, the RB start position (RBₛₜₐᵣₜ) in the first scheduling information, and the start RB of the slots in the odd-numbered groups is an RB indicated by a modulo operation of a sum of the RB start position + the RB offset (RB_{offset}) + the second frequency adjusting value (RB*_{adjusting}*) on a size of an uplink BWP of the SBFD region ( ${N}_{BWP}^{size}$)*.*

Processing of the inter-slot frequency hopping may be represented by using Formula III below: ${RB}_{start} = \left\{\begin{matrix}{RB}_{start} & \left⌊\frac{{n}_{s}^{μ}}{{N}_{FH}}\right⌋ mod 2 = 0 \\ {RB}_{start} = \left({RB}_{start}+{RB}_{offset}+{RB}_{adjusting}\right) mod {N}_{BWP}^{size} & \left⌊\frac{{n}_{s}^{μ}}{{N}_{FH}}\right⌋ mod 2 = 1\end{matrix}\right.$
where ${n}_{s}^{μ}$ denotes a slot number, *N_{FH}* denotes a quantity of slots in a slot group, $\left⌊\frac{{n}_{s}^{μ}}{{N}_{FH}}\right⌋$ represents a number of a slot group, $\left⌊\frac{{n}_{s}^{μ}}{{N}_{FH}}\right⌋ mod 2 = 0$ represents a slot in an even-numbered group, and $\left⌊\frac{{n}_{s}^{μ}}{{N}_{FH}}\right⌋ mod 2 = 1$ represents a slot in an odd-numbered group.

FIG. 18 is a schematic structural diagram I of a resource configuration apparatus according to an embodiment of this application. As shown in FIG. 18, the apparatus 180 includes: a receiving module 1801 and a transmission module 1802.

The receiving module 1801 is configured to receive first configuration information sent by a network device. The first configuration information is used to indicate a resource position of a subband non-overlapping full duplex SBFD region.

The receiving module 1801 is further configured to receive first scheduling information sent by the network device. The first scheduling information is used to indicate a resource position of a first channel.

The transmission module 1802 is configured to transmit the first channel according to the first configuration information and the first scheduling information.

The apparatus provided in this embodiment may be configured to perform the technical solutions in the foregoing method embodiments. Implementation principles and technical effects thereof are similar. Details are not described herein again.

FIG. 19 is a schematic structural diagram II of a resource configuration apparatus according to an embodiment of this application. As shown in FIG. 19, the apparatus 190 includes: a sending module 1901 and a transmission module 1902.

The sending module 1901 is configured to send first configuration information to a terminal device. The first configuration information is used to indicate a resource position of an SBFD region.

The sending module 1901 is further configured to send first scheduling information to the terminal device. The first scheduling information is used to indicate a resource position of a first channel.

The transmission module 1902 is configured to transmit the first channel according to the first configuration information and the first scheduling information.

The apparatus provided in this embodiment may be configured to perform the technical solutions in the foregoing method embodiments. Implementation principles and technical effects thereof are similar. Details are not described herein again.

The resource configuration method provided in the embodiments of this application may be applied to an electronic device having a communication function. The electronic device includes a terminal device. For a specific device form and the like of the terminal device, refer to the foregoing related descriptions. Details are not described herein.

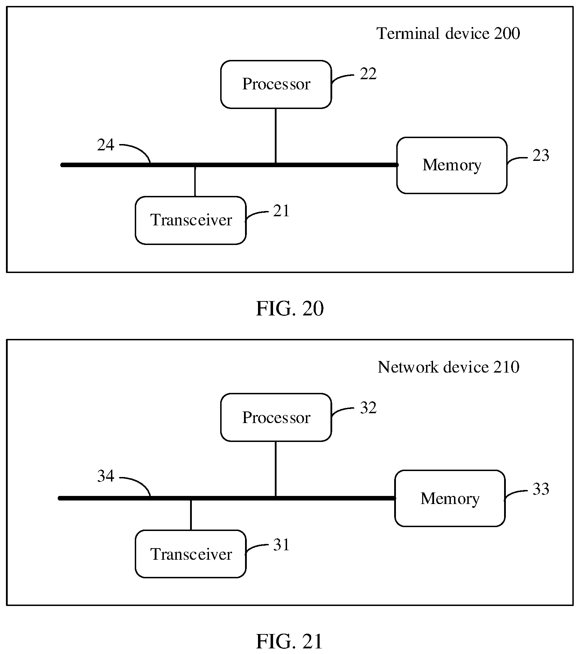

FIG. 20 is a schematic structural diagram of a terminal device according to an embodiment of this application. Referring to FIG. 20, a terminal device 200 may include: a transceiver 21, a memory 22, and a processor 23. The transceiver 21 may include: a transmitter and/or a receiver. The transmitter may also be referred to as a similar description such as a sender, a sending set, a sending port, or a sending interface. The receiver may also be referred to as a similar description such as a receiver, a receiving set, a receiving port, or a receiving interface. For example, the transceiver 21, the memory 22, and the processor 23 are connected to each other by using a bus 24.

The memory 22 is configured to store a program instruction. The processor 23 is configured to execute the program instruction stored in the memory, so as to enable the terminal device 200 to perform the resource configuration method in any one of the foregoing embodiments. The receiver of the transceiver 21 may be configured to perform a receiving function of the terminal device in the foregoing resource configuration method.

FIG. 21 is a schematic structural diagram of a network device according to an embodiment of this application. Referring to FIG. 21, a network device 210 may include: a transceiver 31, a memory 32, and a processor 33. The transceiver 31 may include: a transmitter and/or a receiver. The transmitter may also be referred to as a similar description such as a sender, a sending set, a sending port, or a sending interface. The receiver may also be referred to as a similar description such as a receiver, a receiving set, a receiving port, or a receiving interface. For example, the transceiver 31, the memory 32, and the processor 33 are connected to each other by using a bus 34.

The memory 32 is configured to store a program instruction. The processor 33 is configured to execute the program instruction stored in the memory, so as to enable the network device 210 to perform the resource configuration method in any one of the foregoing embodiments. The receiver of the transceiver 31 may be configured to perform a receiving function of the network device in the foregoing resource configuration method.

An embodiment of this application provides a chip. The chip includes a processor. The processor is configured to invoke a computer program in a memory, to perform the technical solutions in the foregoing embodiments. The implementation principles and technical effects thereof are similar to those in the foregoing related embodiments. Details are not described herein again.

An embodiment of this application further provides a computer-readable storage medium. The computer-readable storage medium stores a computer program. When the computer program is executed by a processor, the foregoing method is implemented. All or some of methods described in the foregoing embodiments may be implemented by using software, hardware, firmware, or any combination thereof. If implemented in software, a function may be stored on a computer-readable medium or transmitted on the computer-readable medium as one or more instructions or code. The computer-readable medium may include a computer storage medium and a communication medium, and may further include any medium that may transmit a computer program from one place to another. The storage medium may be any target medium accessible to a computer.

In a possible implementation, the computer-readable medium may include a RAM, a ROM, a compact disc read-only memory (compact disc read-only memory, CD-ROM) or another optical disk memory, a magnetic disk memory or another magnetic storage device, or any other medium that is to carry or store required program code in a form of an instruction or a data structure, and is accessible to a computer. Furthermore, any connection is appropriately referred to as a computer-readable medium. For example, if software is transmitted from a website, a server or another remote source by using a coaxial cable, an optical fiber cable, a twisted pair, a digital subscriber line (Digital Subscriber Line, DSL) or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include a compact disc, a laser disc, an optical disc, a digital versatile disc (Digital Versatile Disc, DVD), a floppy disk, and a Blu-ray disc. The magnetic disk generally reproduces data in a magnetic manner, and the optical disc reproduces data optically by using laser. The foregoing combination should also be included in the scope of the computer-readable medium.

An embodiment of this application provides a computer program product. The computer program product includes a computer program. The computer program, when run, causes a computer to perform the foregoing method.

The embodiments of this application are described with reference to the flowcharts and/or block diagrams of the method, the device (system), and the computer program product according to the embodiments of this application. It should be understood that computer program instructions can implement each process and/or block in the flowcharts and/or block diagrams and a combination of processes and/or blocks in the flowcharts and/or block diagrams. These computer program instructions may be provided for a general-purpose computer, a dedicated computer, an embedded processor, or a processing unit of another programmable data processing device to generate a machine, so that the instructions executed by a computer or a processing unit of another programmable data processing device generate an apparatus for implementing a specific function in one or more processes in the flowcharts and/or in one or more blocks in the block diagrams.

In the foregoing specific implementations, the objectives, technical solutions, and beneficial effects of the present invention are further described in detail. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

## Claims

1. A resource configuration method, applied to a terminal device, the method comprising:
receiving first configuration information sent by a network device, the first configuration information being used to indicate a resource position of a subband non-overlapping full duplex SBFD region;
receiving first scheduling information sent by the network device, the first scheduling information being used to indicate a resource position of a first channel; and
transmitting the first channel according to the first configuration information and the first scheduling information.

2. The method according to claim 1, wherein the first configuration information comprises time domain position information and frequency domain position information of a first transmission direction.

3. The method according to claim 2, wherein the SBFD region comprises an SBFD slot, and the time domain position information is used to indicate that at least one first slot is the SBFD slot, the first slot being at least part of slots of a first type indicated by a system information block SIB or a first radio resource control RRC configuration message; or
the SBFD region comprises an SBFD symbol, and the time domain position information is used to indicate that at least one first symbol is the SBFD symbol, the first symbol being at least part of symbols of the first type indicated by the SIB or the first RRC configuration message.

4. The method according to claim 3, wherein the first type is a downlink type or a flexible type.

5. The method according to claim 3 or 4, wherein the time domain position information comprises a first bitmap, and a bit in the first bitmap whose value is a first value is used to indicate the first slot, or the bit in the first bitmap whose value is the first value is used to indicate the first symbol.

6. The method according to claim 3 or 4, wherein the time domain position information comprises a slot start position and a slot quantity of the at least one first slot; or
the time domain position information comprises a symbol start position and a symbol quantity of the at least one first symbol.

7. The method according to claim 3 or 4, wherein the time domain position information comprises a first resource indication value RIV, the first RIV being used to indicate a slot start position and a slot quantity of the at least one first slot; or
the first RIV being used to indicate a symbol start position and a symbol quantity of the at least one first symbol.

8. The method according to claim 3 or 4, wherein the time domain position information comprises a first index value, and a slot in a time domain position corresponding to the first index value is the first slot; and a symbol in the time domain position corresponding to the first index value is the first symbol.

9. The method according to any one of claims 2 to 8, wherein the first transmission direction is uplink or downlink; and the frequency domain position information comprises a first bandwidth part BWP configuration parameter, the first BWP configuration parameter being used to indicate an uplink BWP frequency domain position or a downlink BWP frequency domain position of the SBFD region.

10. The method according to any one of claims 2 to 8, wherein the first transmission direction is uplink or downlink; and the frequency domain position information is used to indicate at least one first resource block RB comprised in an uplink BWP frequency domain position or a downlink BWP frequency domain position of the SBFD region.

11. The method according to claim 10, wherein the first RB is a virtual resource block VRB; and
the frequency domain position information comprises a first VRB start position and a first VRB quantity of the at least one first VRB.

12. The method according to claim 10, wherein the first RB is a VRB; and
the frequency domain position information comprises a second RIV, the second RIV being used to indicate a first VRB start position and a first VRB quantity of the at least one first VRB.

13. The method according to claim 10, wherein the first RB is a physical resource block PRB; and
the frequency domain position information comprises a first PRB start position and a first PRB quantity of the at least one first PRB; or
the frequency domain position information comprises a third RIV, the third RIV being used to indicate the first PRB position and the first PRB quantity of the at least one first PRB.

14. The method according to claim 13, wherein the frequency domain position information further comprises a second PRB start position and a second PRB quantity of the first PRB; or
the frequency domain position information comprises a fourth RIV, the fourth RIV being used to indicate the second PRB position and the second PRB quantity of the at least one first PRB.

15. The method according to claim 10, wherein the frequency domain position information comprises a second index value, and an RB in a frequency domain position corresponding to the second index value is the first RB.

16. The method according to any one of claims 2 to 15, wherein the first configuration information further comprises first indication information, the first indication information being used to indicate a size of a resource block group RBG corresponding to an uplink BWP or a downlink BWP of the SBFD region.

17. The method according to any one of claims 2 to 16, wherein the first configuration information further comprises second indication information, the second indication information being used to indicate a frequency domain position of a guard band in the SBFD region.

18. The method according to any one of claims 1 to 17, wherein the first configuration information is at least one of the following: an SIB, RRC signaling, and downlink control information DCI.

19. The method according to any one of claims 1 to 18, wherein the first scheduling information is used to indicate at least one second RB, the second RB being an RB occupied by the first channel in the SBFD region.

20. The method according to claim 19, wherein if a resource allocation type is a first type, the first scheduling information comprises a second bitmap, a bit in the second bitmap whose value is a first value is used to indicate a first RBG, and an RB in the first RBG is the second RB.

21. The method according to claim 19, wherein the second RB is a VRB; and if the resource allocation type is a second type, the first scheduling information is used to indicate the at least one second virtual resource block VRB.

22. The method according to claim 21, wherein if the first channel is continuous in frequency domain of the SBFD region, the first scheduling information comprises a fifth RIV, the fifth RIV being used to indicate a second VRB start position and a second VRB quantity of the at least one second VRB.

23. The method according to claim 22, wherein if the first channel is discontinuous in the frequency domain of the SBFD region,
the first scheduling information comprises a sixth RIV, the sixth RIV being used to indicate a third VRB start position and a third VRB quantity, and the second VRB is a VRB remaining after VRBs corresponding to an invalid region are removed from a plurality of continuous VRBs, the plurality of continuous VRBs being VRBs indicated by the third VRB start position and the third VRB quantity, the invalid region being a frequency region corresponding to a second transmission direction and a guard band region, and the second transmission direction being opposite to a transmission direction corresponding to the first channel; or
the first scheduling information comprises at least two seventh RIVs, any of the seventh RIVs being used to indicate a segment of continuous second VRBs, and when VRB-to-PRB interleaved mapping is performed, interleaved mapping is performed on the second VRBs indicated by the seventh RIV in a first frequency range, the first frequency range being a frequency range individually indicated by the seventh RIV; or
the first scheduling information comprises at least two eighth RIVs, any of the eighth RIVs being used to indicate a segment of continuous second VRBs, and when VRB-to-PRB interleaved mapping is performed, interleaved mapping is performed on the second VRBs indicated by each of the eighth RIV in a second frequency range, the second frequency range being a frequency range jointly indicated by the at least two eighth RIVs;
wherein the invalid region is not counted into a range of the interleaved mapping.

24. The method according to any one of claims 1 to 18, wherein the first scheduling information comprises a first frequency domain resource allocation FDRA, the first FDRA being used to indicate at least one third RB occupied by the first channel in a first region, and the first region being a non-SBFD region or an SBFD region.

25. The method according to claim 24, wherein the first scheduling information further comprises a second FDRA, the second FDRA being used to indicate at least one fourth RB occupied by the first channel in a second region, and the second region being an SBFD region or a non-SBFD region.

26. The method according to claim 24, wherein the first FDRA is further used to map at least one fourth RB occupied by the first channel in a second region, the second region being an SBFD region or a non-SBFD region.

27. The method according to claim 26, wherein if a resource allocation type is a first type, the first FDRA comprises a third bitmap, bits in the third bitmap whose values are a first value are used to indicate an RBG corresponding to the first region and an RBG corresponding to the second region;
wherein a size of the RBG corresponding to the first region is an RBG size configured for the first region, and a size of the RBG corresponding to the second region is an RBG size allocated to the second region.

28. The method according to claim 26, wherein the third RB and the fourth RB are VRBs;
if a resource allocation type is a second type, the first FDRA comprises a ninth RIV, the ninth RIV being used to indicate a fourth VRB start position and a fourth VRB quantity of the at least one third VRB; and
a product of the fourth VRB start position and a first coefficient is used to indicate a start VRB of the at least one fourth VRB, and a product of the fourth VRB quantity and a second coefficient is used to indicate a VRB quantity of the at least one fourth VRB.

29. The method according to any one of claims 1 to 28, wherein the first channel is a physical downlink shared channel PDSCH; or the first channel is a physical uplink shared channel PUSCH.

30. The method according to any one of claims 19 to 29, wherein a scheduling manner of the first channel is single-transmission time interval TTI scheduling; or the scheduling manner of the first channel is multi-TTI scheduling.

31. The method according to any one of claims 1 to 30, wherein the method further comprises:
receiving a frequency hopping parameter sent by the network device, the frequency hopping parameter comprising a first frequency adjusting value for hopping from an SBFD region to a non-SBFD region, and/or a second frequency adjusting value for hopping from the non-SBFD region to the SBFD region.

32. The method according to claim 31, wherein for intra-slot frequency hopping from a first region to a second region, a start RB of a first hop is an RB start position indicated by the first scheduling information, and a start RB of a second hop is an RB indicated by a result of a modulo operation of a second value on a size of a first BWP.

33. The method according to claim 31, wherein for inter-slot frequency hopping from a first region to a second region, a start RB of even-numbered slots is an RB start position indicated by the first scheduling information, and a start RB of odd-numbered slots is an RB indicated by a result of a modulo operation of a second value on a size of a first BWP.

34. The method according to claim 31, wherein for inter-slot-group frequency hopping from a first region to a second region, a start RB of slots in even-numbered groups is an RB start position indicated by the first scheduling information, and a start RB of slots in odd-numbered groups is an RB indicated by a result of a modulo operation of a second value on a size of a first BWP.

35. The method according to any one of claims 32 to 34, wherein the second value is a sum of the RB start position indicated by the first scheduling information, an offset RB, and a frequency adjusting value for hopping from the first region to the second region, and the size of the first BWP is a size of an uplink BWP in the second region.

36. A resource configuration method, applied to a network device, the method comprising:
sending first configuration information to a terminal device, the first configuration information being used to indicate a resource position of an SBFD region;
sending first scheduling information to the terminal device, the first scheduling information being used to indicate a resource position of a first channel; and
transmitting the first channel according to the first configuration information and the first scheduling information.

37. The method according to claim 36, wherein the first configuration information comprises time domain position information and frequency domain position information of a first transmission direction.

38. The method according to claim 37, wherein the SBFD region comprises an SBFD slot, and the time domain position information is used to indicate that at least one first slot is the SBFD slot, the first slot being at least part of slots of a first type indicated by a system information block SIB or a first radio resource control RRC configuration message; or
the SBFD region comprises an SBFD symbol, and the time domain position information is used to indicate that at least one first symbol is the SBFD symbol, the first symbol being at least part of symbols of the first type indicated by the SIB or the first RRC configuration message.

39. The method according to claim 38, wherein the first type is a downlink type or a flexible type.

40. The method according to claim 38 or 39, wherein the time domain position information comprises a first bitmap, and a bit in the first bitmap whose value is a first value is used to indicate the first slot, or the bit in the first bitmap whose value is the first value is used to indicate the first symbol.

41. The method according to claim 38 or 39, wherein the time domain position information comprises a slot start position and a slot quantity of the at least one first slot; or
the time domain position information comprises a symbol start position and a symbol quantity of the at least one first symbol.

42. The method according to claim 38 or 39, wherein the time domain position information comprises a first resource indication value RIV, the first RIV being used to indicate a slot start position and a slot quantity of the at least one first slot; or
the first RIV being used to indicate a symbol start position and a symbol quantity of the at least one first symbol.

43. The method according to claim 38 or 39, wherein the time domain position information comprises a first index value, and a slot in a time domain position corresponding to the first index value is the first slot; and a symbol in the time domain position corresponding to the first index value is the first symbol.

44. The method according to any one of claims 37 to 43, wherein the first transmission direction is uplink or downlink; and the frequency domain position information comprises a first bandwidth part BWP configuration parameter, the first BWP configuration parameter being used to indicate an uplink BWP frequency domain position or a downlink BWP frequency domain position of the SBFD region.

45. The method according to any one of claims 37 to 43, wherein the first transmission direction is uplink or downlink; and the frequency domain position information is used to indicate at least one first resource block RB comprised in an uplink BWP frequency domain position or a downlink BWP frequency domain position of the SBFD region.

46. The method according to claim 45, wherein the first RB is a virtual resource block VRB; and
the frequency domain position information comprises a first VRB start position and a first VRB quantity of the at least one first VRB.

47. The method according to claim 45, wherein the first RB is a VRB; and
the frequency domain position information comprises a second RIV, the second RIV being used to indicate a first VRB start position and a first VRB quantity of the at least one first VRB.

48. The method according to claim 45, wherein the first RB is a physical resource block PRB; and
the frequency domain position information comprises a first PRB start position and a first PRB quantity of the at least one first PRB; or
the frequency domain position information comprises a third RIV, the third RIV being used to indicate the first PRB position and the first PRB quantity of the at least one first PRB.

49. The method according to claim 48, wherein the frequency domain position information further comprises a second PRB start position and a second PRB quantity of the first PRB; or
the frequency domain position information comprises a fourth RIV, the fourth RIV being used to indicate the second PRB position and the second PRB quantity of the at least one first PRB.

50. The method according to claim 45, wherein the frequency domain position information comprises a second index value, and an RB in a frequency domain position corresponding to the second index value is the first RB.

51. The method according to any one of claims 37 to 50, wherein the first configuration information further comprises first indication information, the first indication information being used to indicate a size of a resource block group RBG corresponding to an uplink BWP or a downlink BWP of the SBFD region.

52. The method according to any one of claims 47 to 51, wherein the first configuration information further comprises second indication information, the second indication information being used to indicate a frequency domain position of a guard band in the SBFD region.

53. The method according to any one of claims 36 to 52, wherein the first configuration information is at least one of the following: an SIB, RRC signaling, and DCI.

54. The method according to any one of claims 36 to 53, wherein the first scheduling information is used to indicate at least one second RB, the second RB being an RB occupied by the first channel in the SBFD region.

55. The method according to claim 54, wherein if a resource allocation type is a first type, the first scheduling information comprises a second bitmap, a bit in the second bitmap whose value is a first value is used to indicate a first RBG, and an RB in the first RBG is the second RB.

56. The method according to claim 54, wherein the second RB is a VRB; and if the resource allocation type is a second type, the first scheduling information is used to indicate the at least one second virtual resource block VRB.

57. The method according to claim 56, wherein if the first channel is continuous in frequency domain of the SBFD region, the first scheduling information comprises a fifth RIV, the fifth RIV being used to indicate a second VRB start position and a second VRB quantity of the at least one second VRB.

58. The method according to claim 57, wherein
if the first channel is discontinuous in the frequency domain of the SBFD region,
the first scheduling information comprises a sixth RIV, the sixth RIV being used to indicate a third VRB start position and a third VRB quantity, and the second VRB is a VRB remaining after VRBs corresponding to an invalid region are removed from a plurality of continuous VRBs, the plurality of continuous VRBs being VRBs indicated by the third VRB start position and the third VRB quantity, the invalid region being a frequency region corresponding to a second transmission direction and a guard band region, and the second transmission direction being opposite to a transmission direction corresponding to the first channel; or
the first scheduling information comprises at least two seventh RIVs, any of the seventh RIVs being used to indicate a segment of continuous second VRBs, and when VRB-to-PRB interleaved mapping is performed, interleaved mapping is performed on the second VRBs indicated by the seventh RIV in a first frequency range, the first frequency range being a frequency range individually indicated by the seventh RIV; or
the first scheduling information comprises at least two eighth RIVs, any of the eighth RIVs being used to indicate a segment of continuous second VRBs, and when VRB-to-PRB interleaved mapping is performed, interleaved mapping is performed on the second VRBs indicated by each of the eighth RIV in a second frequency range, the second frequency range being a frequency range jointly indicated by the at least two eighth RIVs;
wherein the invalid region is not counted into a range of the interleaved mapping.

59. The method according to any one of claims 36 to 53, wherein the first scheduling information comprises a first frequency domain resource allocation FDRA, the first FDRA being used to indicate at least one third RB occupied by the first channel in a first region, and the first region being a non-SBFD region or an SBFD region.

60. The method according to claim 59, wherein the first scheduling information further comprises a second FDRA, the second FDRA being used to indicate at least one fourth RB occupied by the first channel in a second region, and the second region being an SBFD region or a non-SBFD region.

61. The method according to claim 59, wherein the first FDRA is further used to map at least one fourth RB occupied by the first channel in a second region, the second region being an SBFD region or a non-SBFD region.

62. The method according to claim 61, wherein if a resource allocation type is a first type, the first FDRA comprises a third bitmap, a bit in the third bitmap whose value is a first value is used to indicate an RBG corresponding to the first region and an RBG corresponding to the second region;
wherein a size of the RBG corresponding to the first region is an RBG size configured for the first region, and a size of the RBG corresponding to the second region is an RBG size allocated to the second region.

63. The method according to claim 61, wherein the third RB and the fourth RB are VRBs;
if a resource allocation type is a second type, the first FDRA comprises a ninth RIV, the ninth RIV being used to indicate a fourth VRB start position and a fourth VRB quantity of the at least one third VRB; and
a product of the fourth VRB start position and a first coefficient is used to indicate a start VRB of the at least one fourth VRB, and a product of the fourth VRB quantity and a second coefficient is used to indicate a VRB quantity of the at least one fourth VRB.

64. The method according to any one of claims 36 to 63, wherein the first channel is a physical downlink shared channel PDSCH; or the first channel is a physical uplink shared channel PUSCH.

65. The method according to any one of claims 54 to 64, wherein a scheduling manner of the first channel is single-transmission time interval TTI scheduling; or the scheduling manner of the first channel is multi-TTI scheduling.

66. The method according to any one of claims 36 to 65, wherein the method further comprises:
receiving a frequency hopping parameter sent by the terminal device, the frequency hopping parameter comprising a first frequency adjusting value for hopping from an SBFD region to a non-SBFD region, and/or a second frequency adjusting value for hopping from the non-SBFD region to the region.

67. The method according to claim 66, wherein for intra-slot frequency hopping from a first region to a second region, a start RB of a first hop is an RB start position indicated by the first scheduling information, and a start RB of a second hop is an RB indicated by a result of a modulo operation of a second value on a size of a first BWP.

68. The method according to claim 66, wherein for inter-slot frequency hopping from a first region to a second region, a start RB of even-numbered slots is an RB start position indicated by the first scheduling information, and a start RB of odd-numbered slots is an RB indicated by a result of a modulo operation of a second value on a size of a first BWP.

69. The method according to claim 66, wherein for inter-slot-group frequency hopping from a first region to a second region, a start RB of slots in even-numbered groups is an RB start position indicated by the first scheduling information, and a start RB of slots in odd-numbered groups is an RB indicated by a result of a modulo operation of a second value on a size of a first BWP.

70. The method according to any one of claims 67 to 69, wherein the second value is a sum of the RB start position indicated by the first scheduling information, an offset RB, and a frequency adjusting value for hopping from the first region to the second region, and the size of the first BWP is a size of an uplink BWP in the second region.

71. A terminal device, comprising: a processor and a memory;
the memory storing computer-executable instructions; and
the processor executing the computer-executable instructions stored in the memory, to cause the terminal device to perform the method according to any one of claims 1 to 35.

72. A network device, comprising: a processor and a memory;
the memory storing computer-executable instructions; and
the processor executing the computer-executable instructions stored in the memory, to cause the network device to perform the method according to any one of claims 36 to 70.

73. A computer-readable storage medium, the computer-readable storage medium having a computer program stored therein, wherein when the computer program is executed by a processor, the method according to any one of claims 1 to 70 is implemented.

74. A computer program product, comprising a computer program, wherein when the computer program is run, a computer is caused to perform the method according to any one of claims 1 to 70.
